(19) Europäisches Patentamt / European Patent Office / Office européen des brevets

(11) **EP 3 820 201 A1**

(12) **EUROPEAN PATENT APPLICATION**
published in accordance with Art. 153(4) EPC

(43) Date of publication:
**12.05.2021 Bulletin 2021/19**

(21) Application number: **19897874.4**

(22) Date of filing: **16.12.2019**

(51) Int Cl.:
**H04W 48/10** (2009.01)

(86) International application number:
**PCT/CN2019/125680**

(87) International publication number:
**WO 2020/125585 (25.06.2020 Gazette 2020/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **17.12.2018 CN 201811544528**

(71) Applicant: **HUAWEI TECHNOLOGIES CO., LTD.
Shenzhen, Guangdong 518129 (CN)**

(72) Inventors:
• **CHEN, Ying
Shenzhen, Guangdong 518129 (CN)**
• **LUO, Hejia
Shenzhen, Guangdong 518129 (CN)**
• **QIAO, Yunfei
Shenzhen, Guangdong 518129 (CN)**
• **LI, Rong
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) Embodiments of this application provide a communications method and an apparatus, and relate to the communications field. The method includes: A terminal receives a broadcast signal sent by an access device; and then the terminal may obtain a type of the access device based on the received broadcast signal, where the type of the access device includes a first type and/or a second type, where the first type includes a ground base station or a non-ground base station, and the second type includes at least one of the following types: a ground base station, a high-altitude base station, a low-orbit satellite, a medium-orbit satellite, or a high-orbit satellite. In this application, the terminal can identify the type of the access device by using the broadcast signal sent by the access device, thereby implementing communication convergence between ground communication and non-ground communication, and effectively improving resource utilization and user experience.

FIG. 3

**Description**

This application claims priority to Chinese Patent Application No. 201811544528.X, filed with the China National Intellectual Property Administration on December 17, 2018 and entitled "COMMUNICATIONS METHOD AND APPARATUS", which is incorporated herein by reference in its entirety.

**TECHNICAL FIELD**

Embodiments of this application relate to the communications field, and in particular, to a communications method and apparatus.

**BACKGROUND**

Current communication manners may include ground communication and non-ground communication (for example, a satellite, a hot air balloon that can implement a base station function, or a high-altitude platform such as an unmanned aerial vehicle). In the current technology, a common terminal device can support only ground communication, and only a dedicated satellite terminal can implement satellite communication.

With the development of communications technologies and user requirements, how to implement communication convergence between ground communication and satellite communication becomes an urgent problem to be resolved.

**SUMMARY**

This application provides a communications method and apparatus, to implement communication convergence between ground communication and non-ground communication.

To achieve the foregoing objective, this application uses the following technical solutions:
According to a first aspect, an embodiment of this application provides a communications method, where the communications method is applied to a terminal, and the method may include: The terminal receives a broadcast signal sent by an access device; and then the terminal may obtain a type of the access device based on the received broadcast signal, where the type of the access device includes a first type and/or a second type, where the first type includes a ground base station or a non-ground base station, and the second type includes at least one of the following types: a ground base station, a high-altitude base station, a low-orbit satellite, a medium-orbit satellite, or a high-orbit satellite.

In the foregoing manner, the terminal can identify the type of the access device by using the broadcast signal sent by the access device, thereby implementing communication convergence between ground communication and non-ground communication, and effectively improving resource utilization and user experience.

In a possible implementation, the broadcast signal includes first identification information, and the first identification information is used to indicate the type of the access device, where the first identification information is a primary synchronization signal PSS and/or a secondary synchronization signal SSS.

In the foregoing manner, the terminal can obtain the type of the access device based on the PSS or the SSS and the PSS and the SSS.

In a possible implementation, the obtaining a type of the access device based on the broadcast signal specifically includes: determining, based on a relationship between the first identification information and the first type, that the access device is a ground base station or a non-ground base station; and if the access device is a non-ground base station, obtaining the type of the access device based on a relationship between the first identification information and the second type.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal specifically includes: determining, based on a relationship between the PSS and the first type, that the access device is a ground base station or a non-ground base station; and if the access device is a non-ground base station, obtaining the type of the access device based on a relationship between the SSS and the second type.

In the foregoing manner, combinations of different manners are implemented to jointly indicate the type of the access device, thereby reducing design complexity of the broadcast signal, and improving efficiency of identifying the type of the access device by the terminal.

In a possible implementation, the broadcast signal includes a first-type parameter for identifying a type of the access device, and the first-type parameter is a sequence for generating a preamble.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal specifically includes: parsing the first-type parameter to obtain a first parameter; and obtaining the type of the access device based on a relationship between the first parameter and the type of the access device.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining the type of the access device based on a relationship between the first parameter and the type of the access device specifically includes: determining, based on a relationship between the first parameter and the first type, that the access device is a ground base station or a non-ground base station; and if the access device is a non-ground base station, obtaining the type of the access device based on a relationship between the first parameter and the second type.

In the foregoing manner, combinations of different manners are implemented to jointly indicate the type of the access device, thereby reducing design complexity of the broadcast signal, and improving efficiency of identifying the type of the access device by the terminal.

In a possible implementation, the sequence includes a ZC sequence and/or an M sequence.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal further includes: determining, based on a relationship between the first identification information and the first type, that the access device is a ground base station or a non-ground base station; and if the access device is a non-ground base station, obtaining the type of the access device based on a relationship between the first parameter and the second type.

In the foregoing manner, combinations of different manners are implemented to jointly indicate the type of the access device, thereby reducing design complexity of the broadcast signal, and improving efficiency of identifying the type of the access device by the terminal.

In a possible implementation, a position of a time domain resource of the broadcast signal and/or a position of a frequency domain resource of the broadcast signal are/is used to indicate the type of the access device.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal specifically includes: obtaining a position of a time domain resource of the broadcast signal and/or a position of a frequency domain resource of the broadcast signal; and obtaining the type of the access device based on a relationship between the position of a time domain resource and/or the position of a frequency domain resource and the type of the access device.

In the foregoing manner, combinations of different manners are implemented to jointly indicate the type of the access device, thereby reducing design complexity of the broadcast signal, and improving efficiency of identifying the type of the access device by the terminal.

In a possible implementation, the position of a time domain resource is used to indicate an offset value N between a position of the broadcast signal on a time domain resource to which the broadcast signal belongs and a specified position.

In the foregoing manner, combinations of different manners are implemented to jointly indicate the type of the access device, thereby reducing design complexity of the broadcast signal, and improving efficiency of identifying the type of the access device by the terminal.

In a possible implementation, if a value of N is in a first interval, the access device is a ground base station; or if the value of N is not in a first interval, the access device is a non-ground base station.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal specifically includes: obtaining a value of N; and obtaining the type of the access device based on the value of N.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal specifically includes: obtaining a value of N; determining, based on the value of N, that the access device is a ground base station or a non-ground base station; and if the access device is a non-ground base station, obtaining the type of the access device based on the value of N.

In the foregoing manner, combinations of different manners are implemented to jointly indicate the type of the access device, thereby reducing design complexity of the broadcast signal, and improving efficiency of identifying the type of the access device by the terminal.

In a possible implementation, the position of a frequency domain resource includes a size and/or a start position of a resource block occupied by the broadcast signal on a frequency domain resource to which the broadcast signal belongs.

In the foregoing manner, combinations of different manners are implemented to jointly indicate the type of the access device, thereby reducing design complexity of the broadcast signal, and improving efficiency of identifying the type of the access device by the terminal.

In a possible implementation, if the position of a frequency domain resource meets a first condition, the access device is a ground base station; and if the position of a frequency domain resource does not meet the first condition, the access device is a non-ground base station.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal specifically includes: obtaining a position of a frequency domain resource; and obtaining the type of the access device based on the position of a frequency domain resource.

In the foregoing manner, combinations of different manners are implemented to jointly indicate the type of the access device, thereby reducing design complexity of the broadcast signal, and improving efficiency of identifying the type of the access device by the terminal.

In a possible implementation, the obtaining a type of the access device based on the broadcast signal specifically includes: obtaining a position of a frequency domain resource; determining, based on the position of a frequency domain resource, that the access device is a ground base station or a non-ground base station; and if the access device is a non-ground base station, obtaining the type of the access device based on the position of a frequency domain resource.

In the foregoing manner, combinations of different manners are implemented to jointly indicate the type of the access device, thereby reducing design complexity of the broadcast signal, and improving efficiency of identifying the type of the access device by the terminal.

According to a second aspect, an embodiment of this application provides a communications method, where the method is applied to a base station, and the method may include: generating a broadcast signal, where the broadcast signal is used to indicate a type of an access device, and the type of the access device includes a ground base station or a non-ground base station; and sending the broadcast signal.

In a possible implementation, the broadcast signal includes first identification information, and the first identification information is used to indicate the type of the access device, where the first identification information is a primary synchronization signal PSS and/or a secondary synchronization signal SSS.

In a possible implementation, the PSS is used to indicate that the access device is a ground base station or a non-ground base station, and the SSS is used to: if the PSS indicates that the access device is a non-ground base station, indicate that the access device is a high-altitude base station, a low-orbit satellite, a medium-orbit satellite, or a high-orbit satellite.

In a possible implementation, the broadcast signal includes a first-type parameter for identifying a type of the access device, and the first-type parameter is a sequence for generating a preamble preamble.

In a possible implementation, the sequence includes a ZC sequence and/or an M sequence.

In a possible implementation, a position of a time domain resource of the broadcast signal and/or a position of a frequency domain resource of the broadcast signal are/is used to indicate the type of the access device.

In a possible implementation, the position of a time domain resource is used to indicate an offset value N between a position of the broadcast signal on a time domain resource to which the broadcast signal belongs and a specified position.

In a possible implementation, if a value of N is in a first interval, the access device is a ground base station; or if the value of N is not in a first interval, the access device is a non-ground base station.

In a possible implementation, the value of N is used to indicate that the access device is a ground base station, a high-altitude base station, a low-orbit satellite, a medium-orbit satellite, or a high-orbit satellite.

In a possible implementation, the position of a frequency domain resource includes a size and/or a start position of a resource block occupied by the broadcast signal on a frequency domain resource to which the broadcast signal belongs.

In a possible implementation, if the position of a frequency domain resource meets a first condition, the access device is a ground base station; and if the position of a frequency domain resource does not meet the first condition, the access device is a non-ground base station.

According to a third aspect, an embodiment of this application provides a terminal, where the terminal includes a receiving module and an obtaining module. The receiving module is configured to receive a broadcast signal sent by an access device. The obtaining module is configured to obtain a type of the access device based on the broadcast signal, where the type of the access device includes a first type and/or a second type, where the first type includes a ground base station or a non-ground base station, and the second type includes at least one of the following types: a ground base station, a high-altitude base station, a low-orbit satellite, a medium-orbit satellite, or a high-orbit satellite.

In a possible implementation, the broadcast signal includes first identification information, and the first identification information is used to indicate the type of the access device, where the first identification information is a primary synchronization signal PSS and/or a secondary synchronization signal SSS.

In a possible implementation, the obtaining module may be configured to: determine, based on a relationship between the first identification information and the first type, that the access device is a ground base station or a non-ground base station; and if the access device is a non-ground base station, obtain the type of the access device based on a relationship between the first identification information and the second type.

In a possible implementation, the obtaining module may be configured to: determine, based on a relationship between the PSS and the first type, that the access device is a ground base station or a non-ground base station; and if the access device is a non-ground base station, obtain the type of the access device based on a relationship between the SSS and the second type.

In a possible implementation, the broadcast signal includes a first-type parameter for identifying a type of the access device, and the first-type parameter is a sequence for generating a preamble preamble.

In a possible implementation, the obtaining module may be configured to: parse the first-type parameter to obtain a first parameter; and obtain the type of the access device based on a relationship between the first parameter and the type of the access device.

In a possible implementation, the obtaining module may be configured to: determine, based on a relationship between the first parameter and the first type, that the access device is a ground base station or a non-ground base station; and if the access device is a non-ground base station, obtain the type of the access device based on a relationship between the first parameter and the second type.

In a possible implementation, the sequence includes a ZC sequence and/or an M sequence.

In a possible implementation, the obtaining module may be configured to: determine, based on a relationship between the first identification information and the first type, that the access device is a ground base station or a non-ground base station; and if the access device is a non-ground base station, obtain the type of the access device based on a relationship between the first parameter and the second type.

In a possible implementation, a position of a time domain resource of the broadcast signal and/or a position of a frequency domain resource of the broadcast signal are/is used to indicate the type of the access device.

In a possible implementation, the obtaining module may be configured to: obtain a position of a time domain resource of the broadcast signal and/or a position of a frequency domain resource of the broadcast signal; and obtain the type of the access device based on a relationship between the position of a time domain resource and/or the position of a frequency domain resource and the type of the access device.

In a possible implementation, the position of a time domain resource is used to indicate an offset value N between a position of the broadcast signal on a time domain resource to which the broadcast signal belongs and a specified position.

In a possible implementation, if a value of N is in a first interval, the access device is a ground base station; or if the value of N is not in a first interval, the access device is a non-ground base station.

In a possible implementation, the obtaining module may be configured to: obtain a value of N; and obtain the type of the access device based on the value of N.

In a possible implementation, the obtaining module may be configured to: obtain a value of N; determine, based on the value of N, that the access device is a ground base station or a non-ground base station; and if the access device is a non-ground base station, obtain the type of the access device based on the value of N.

In a possible implementation, the position of a frequency domain resource includes a size and/or a start position of a resource block occupied by the broadcast signal on a frequency domain resource to which the broadcast signal belongs.

In a possible implementation, if the position of a frequency domain resource meets a first condition, the access device is a ground base station; and if the position of a frequency domain resource does not meet the first condition, the access device is a non-ground base station.

In a possible implementation, the obtaining module may be configured to: obtain a position of a frequency domain resource; and obtain the type of the access device based on the position of a frequency domain resource.

In a possible implementation, the obtaining module may be configured to: obtain a position of a frequency domain resource; determine, based on the position of a frequency domain resource, that the access device is a ground base station or a non-ground base station; and if the access device is a non-ground base station, obtain the type of the access device based on the position of a frequency domain resource.

According to a fourth aspect, an embodiment of this application provides an access device, including a generation module and a sending module. The generation module may be configured to generate a broadcast signal, where the broadcast signal is used to indicate a type of the access device, and the type of the access device includes a ground base station or a non-ground base station. The sending module may be configured to send the broadcast signal.

In a possible implementation, the broadcast signal includes first identification information, and the first identification information is used to indicate the type of the access device, where the first identification information is a primary synchronization signal PSS and/or a secondary synchronization signal SSS.

In a possible implementation, the PSS is used to indicate that the access device is a ground base station or a non-ground base station, and the SSS is used to: if the PSS indicates that the access device is a non-ground base station, indicate that the access device is a high-altitude base station, a low-orbit satellite, a medium-orbit satellite, or a high-orbit satellite.

In a possible implementation, the broadcast signal includes a first-type parameter for identifying a type of the access device, and the first-type parameter is a sequence for generating a preamble preamble.

In a possible implementation, the sequence includes a ZC sequence and/or an M sequence.

In a possible implementation, a position of a time domain resource of the broadcast signal and/or a position of a frequency domain resource of the broadcast signal are/is used to indicate the type of the access device.

In a possible implementation, the position of a time domain resource is used to indicate an offset value N between a position of the broadcast signal on a time domain resource to which the broadcast signal belongs and a specified position.

In a possible implementation, if a value of N is in a first interval, the access device is a ground base station; or if the value of N is not in a first interval, the access device is a non-ground base station.

In a possible implementation, the value of N is used to indicate that the access device is a ground base station, a high-altitude base station, a low-orbit satellite, a medium-orbit satellite, or a high-orbit satellite.

In a possible implementation, the position of a frequency domain resource includes a size and/or a start position of a resource block occupied by the broadcast signal on a frequency domain resource to which the broadcast signal belongs.

In a possible implementation, if the position of a frequency domain resource meets a first condition, the access device is a ground base station; and if the position of a frequency domain resource does not meet the first condition, the access device is a non-ground base station.

According to a fifth aspect, an embodiment of this application provides a communications apparatus, including a transceiver/transceiver pin and a processor, and optionally further including a memory. The transceiver/transceiver pin, the processor, and the memory communicate with each other by using an internal connection path; the processor is configured to execute an instruction to control the transceiver/transceiver pin to send or receive a signal; and the memory is configured to store instructions. When the processor executes the instruction, the processor performs the method according to the first aspect or any possible implementation of the first aspect.

According to a sixth aspect, an embodiment of this application provides a communications apparatus, including a transceiver/transceiver pin and a processor, and optionally further including a memory. The transceiver/transceiver pin, the processor, and the memory communicate with each other by using an internal connection path; the processor is configured to execute an instruction to control the transceiver/transceiver pin to send or receive a signal; and the memory is configured to store instructions. When the processor executes the instruction, the processor performs the method according to the second aspect or any possible implementation of the second aspect.

According to a seventh aspect, an embodiment of this application provides a computer-readable medium, configured to store a computer program, where the computer program includes an instruction used to perform the method according to the first aspect or any possible implementation of the first aspect.

According to an eighth aspect, an embodiment of this application provides a computer-readable medium, configured to store a computer program, where the computer program includes an instruction used to perform the method according to the second aspect or any possible implementation of the second aspect.

According to a ninth aspect, an embodiment of this application provides a computer program, where the computer program includes an instruction used to perform the method according to the first aspect or any possible implementation of the first aspect.

According to a tenth aspect, an embodiment of this application provides a computer program, where the computer program includes an instruction used to perform the method according to the second aspect or any possible implementation of the second aspect.

According to an eleventh aspect, an embodiment of this application provides a chip, where the chip includes a processing circuit and a transceiver pin. The transceiver pin and the processor communicate with each other by using an internal connection path, and the processor performs the method according to the first aspect or any possible implementation of the first aspect, to control the receive pin to receive a signal, and control the transmit pin to send a signal.

According to a twelfth aspect, an embodiment of this application provides a chip, where the chip includes a processing circuit and a transceiver pin. The transceiver pin and the processor communicate with each other by using an internal connection path, and the processor performs the method according to the second aspect or any possible implementation of the second aspect, to control the receive pin to receive a signal, and control the transmit pin to send a signal.

According to a thirteenth aspect, an embodiment of this application provides a communications system, where the system includes the terminal and the access device according to the first aspect and the second aspect.

**BRIEF DESCRIPTION OF DRAWINGS**

To describe the technical solutions in the embodiments of this application more clearly, the following briefly describes the accompanying drawings for describing the embodiments of this application. Apparently, the accompanying drawings in the following description show merely some embodiments of this application, and a person of ordinary skill in the art may derive other drawings from these accompanying drawings without creative efforts.

FIG. 1 is a schematic diagram of a communications system according to an embodiment of this application;
FIG. 2a is a schematic structural diagram of a base station;
FIG. 2b is a schematic structural diagram of a terminal;
FIG. 3 is a schematic flowchart of a communications method according to an embodiment of this application;
FIG. 4 is a schematic flowchart of obtaining a type of an access device by a terminal according to an embodiment of this application;
FIG. 5 is a schematic flowchart of obtaining a type of an access device by a terminal according to an embodiment of this application;
FIG. 6 is a schematic flowchart of obtaining a type of an access device by a terminal according to an embodiment of this application;
FIG. 7 is a schematic flowchart of obtaining a type of an access device by a terminal according to an embodiment of this application;
FIG. 8a to FIG. 8j are schematic diagrams of positions of frequency domain resources of a broadcast signal according to an embodiment of this application;
FIG. 9 is a schematic flowchart of obtaining a type of an access device by a terminal according to an embodiment of this application;
FIG. 10a to FIG. 10e are schematic diagrams of frequency domain resource allocation manners of a PSS and an SSS according to an embodiment of this application;
FIG. 11A, FIG. 11B and FIG. 11C are schematic diagrams of time domain resource allocation manners and frequency domain resource allocation manners of a PSS and an SSS according to an embodiment of this application;
FIG. 12a to FIG. 12d are schematic diagrams of a time domain resource allocation manner and a frequency domain resource allocation manner of a PBCH according to an embodiment of this application;
FIG. 13 is a schematic block diagram of a terminal according to an embodiment of this application;
FIG. 14 is a schematic structural diagram of a terminal according to an embodiment of this application;
FIG. 15 is a schematic block diagram of an access device according to an embodiment of this application; and
FIG. 16 is a schematic structural diagram of an access device according to an embodiment of this application.

**DESCRIPTION OF EMBODIMENTS**

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in the embodiments of this application, the terms "first", "second", and so on are intended to distinguish between different objects but do not indicate a particular order of the objects. For example, a first target object and a second target object are used to distinguish different target objects, but are not used to describe a specific order of the target objects.

In addition, in the embodiments of this application, the word "exemplary" or "for example" is used to represent giving an example, an illustration, or a description. Any embodiment or design scheme described as an "exemplary" or "for example" in the embodiments of this application should not be explained as being more preferred or having more advantages than another embodiment or design scheme. Exactly, use of the word "exemplary" or "example" or the like is intended to present a relative concept in a specific manner.

In the description of the embodiment of this application, unless otherwise stated, "multiple" means two or more than two. For example, a plurality of processing units refer to two or more processing units; and a plurality of systems refer to two or more systems.

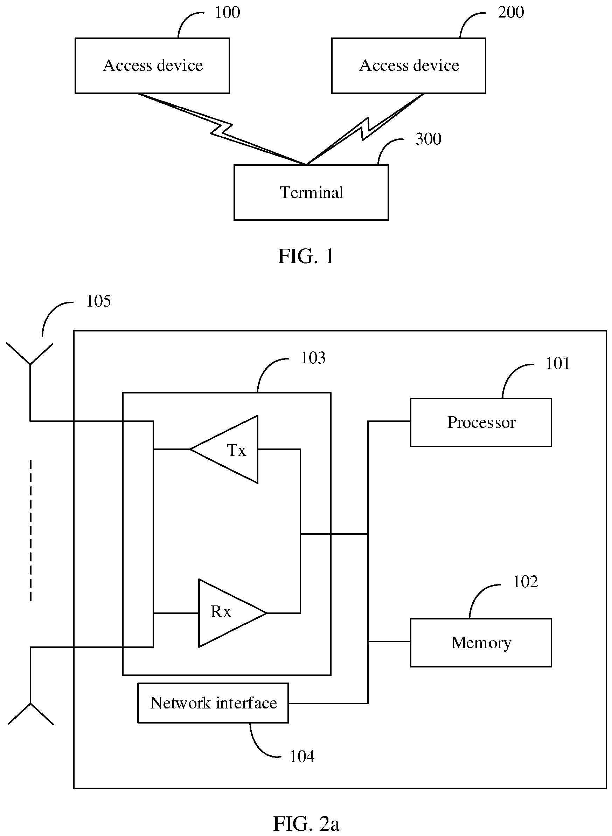

Before the technical solutions in the embodiments of this application are described, a communications system in the embodiments of this application is first described with reference to the accompanying drawings. FIG. 1 is a schematic diagram of a communications system according to an embodiment of this application. The communications system includes an access device 100, an access device 200, and a terminal 300. In a specific implementation process of this embodiment of this application, the terminal 300 may be a device such as a computer, a smartphone, a telephone, a cable TV set-top box, or a digital subscriber line router. The access device 100 and the access device 200 may be one of a ground base station, a high-altitude base station, a low-orbit satellite, a medium-orbit satellite, or a high-orbit satellite. It should be noted that, in actual application, there may be one or more access devices and one or more terminals. The quantities of base stations and terminals in the communications system shown in FIG. 1 are merely an adaptive example. This is not limited in this application.

The communications system may be configured to support a fourth generation (fourth generation, 4G) access technology, for example, a long term evolution (long term evolution, LTE) access technology. Alternatively, the communications system may support a fifth generation (fifth generation, 5G) access technology, for example, a new radio (new radio, NR) access technology. Alternatively, the communications system may be configured to support a third generation (third generation, 3G) access technology, for example, a universal mobile telecommunications system (universal mobile telecommunications system, UMTS) access technology. Alternatively, the communications system may be configured to support a second generation (second generation, 2G) access technology, for example, a global system for mobile communications (global system for mobile communications, GSM) access technology. Alternatively, the communications system may be configured to support a plurality of wireless technologies, for example, an LTE technology and an NR technology. In addition, the communications system may alternatively be applicable to a narrow band-Internet of Things (Narrow Band-Internet of Things, NB-IoT), an enhanced data rate for GSM evolution (Enhanced Data rate for GSM Evolution, EDGE) system, and a wideband code division multiple access (Wideband Code Division Multiple Access, WCDMA) system, a code division multiple access 2000 (Code Division Multiple Access, CDMA 2000) system, a time division-synchronization code division multiple access (Time Division-Synchronization Code Division Multiple Access, TD-SCDMA) system, a long term evolution (Long Term Evolution, LTE) system, and a future-oriented communications technology.

In addition, the access device (the access device 100 and the access device 200) in FIG. 1 may be configured to support access of a terminal, for example, may be a base transceiver station (base transceiver station, BTS) and a base station controller (base station controller, BSC) in a 2G access technology communications system, a node B (node B) and a radio network controller (radio network controller, RNC) in a 3G access technology communications system, and an evolved nodeB (evolved nodeB, eNB) in a 4G access technology communications system, a ground device such as a next generation nodeB (next generation nodeB, gNB), a transmission reception point (transmission reception point, TRP), a relay node (relay node), and an access point (access point, AP) in a 5G access technology communications system, or a non-ground device: a high-altitude base station, for example, a device such as a hot air balloon that can provide a wireless access function for a terminal, a low-orbit satellite, a medium-orbit satellite, or a high-orbit satellite. For ease of description, in all the embodiments of this application, all the foregoing apparatuses that provide a wireless communication function for the terminal are referred to as an access device or a base station.

The terminal 300 in FIG. 1 may be a device that provides voice or data connectivity for a user, for example, may also be referred to as a mobile station (mobile station), a subscriber unit (subscriber unit), a station (station), or terminal equipment (terminal equipment, TE). The terminal may be a cellular phone (cellular phone), a personal digital assistant (personal digital assistant, PDA), a wireless modem (modem), a handheld device (handheld), or a laptop computer (laptop computer), a cordless phone (cordless phone), a wireless local loop (wireless local loop, WLL) station, or a tablet computer (pad). With the development of wireless communications technologies, all devices that can access a communications system, communicate with a network side of a communications system, or communicate with another object by using a communications system may be terminals in this embodiment of this application, for example, terminals and automobiles in intelligent transportation, household devices in smart homes, electric meter reading instruments, voltage monitoring instruments, and environment monitoring instruments in smart grids, or video surveillance instruments and cash registers in smart security networks. In this embodiment of this application, the terminal may communicate with a base station, for example, the access device 100 or the access device 200 in FIG. 1. A plurality of terminals may also communicate with each other. The terminal may be statically fixed or mobile.

FIG. 2a is a schematic structural diagram of a base station. In FIG. 2a:
The access device includes at least one processor 101, at least one memory 102, at least one transceiver 103, at least one network interface 104, and one or more antennas 105. The processor 101, the memory 102, the transceiver 103, and the network interface 104 are connected, for example, by using a bus. The antenna 105 is connected to the transceiver 103. The network interface 104 is configured to enable the base station to be connected to another communications device by using a communication link. In this embodiment of this application, the connection may include various interfaces, transmission lines, buses, or the like. This is not limited in this embodiment.

The processor, for example, the processor 101, in this embodiment of this application may include at least one of the following types: a general-purpose central processing unit (Central Processing Unit, CPU) or a digital signal processor (Digital Signal Processor, DSP), a microprocessor, an application-specific integrated circuit (Application-Specific Integrated Circuit, ASIC), a microcontroller unit (Microcontroller Unit, MCU), and a field programmable gate array (Field Programmable Gate Array, FPGA), or an integrated circuit configured to implement a logical operation. For example, the processor 101 may be a single-core (single-CPU) processor or a multi-core (multi-CPU) processor. The at least one processor 101 may be integrated into one chip or located on a plurality of different chips.

The memory, for example, the memory 102, in this embodiment of this application may include at least one of the following types: a read-only memory (read-only memory, ROM) or another type of static storage device that can store static information and an instruction, a random access memory (random access memory, RAM), or another type of dynamic storage device that can store information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another optical disk storage, an optical disc storage (including a compressed optical disc, a laser disc, an optical disc, a digital versatile optical disc, a Blu-ray disc, and the like), a magnetic disk storage medium or another magnetic storage device, or any other medium capable of carrying or storing desired program code in the form of instructions or data structures and capable of being accessed by a computer, but not limited thereto.

The memory 102 may exist independently, and is connected to the processor 101. Optionally, the memory 102 and the processor 101 may alternatively be integrated, for example, integrated into one chip. The memory 102 can store program code for executing the technical solutions in the embodiments of this application, and the processor 101 controls execution of the program code. Various types of computer program code that are executed may also be considered as a driver of the processor 101. For example, the processor 101 is configured to execute the computer program code stored in the memory 102, to implement the technical solutions in the embodiments of this application.

The transceiver 103 may be configured to support receiving or sending of a radio frequency signal between an access network device and a terminal, and the transceiver 103 may be connected to the antenna 105. The transceiver 103 includes a transmitter Tx and a receiver Rx. Specifically, one or more antennas 105 may receive a radio frequency signal, and the receiver Rx of the transceiver 103 is configured to receive the radio frequency signal from the antenna, convert the radio frequency signal into a digital baseband signal or a digital intermediate frequency signal, and provide the digital baseband signal or the digital intermediate frequency signal to the processor 101, so that the processor 101 performs further processing, for example, demodulation processing and decoding processing, on the digital baseband signal or the digital intermediate frequency signal. In addition, the transmitter Tx of the transceiver 103 is further configured to receive a modulated digital baseband signal or digital intermediate frequency signal from the processor 101, convert the modulated digital baseband signal or digital intermediate frequency signal into a radio frequency signal, and send the radio frequency signal by using the one or more antennas 105. Specifically, the receiver Rx may selectively perform one or more levels of down-mixing processing and analog-to-digital conversion processing on the radio frequency signal to obtain a digital baseband signal or a digital intermediate frequency signal, and a sequence of the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal to obtain a radio frequency signal, and a sequence of the up-mixing processing and the digital-to-analog conversion processing is adjustable. The digital baseband signal and the digital intermediate frequency signal may be collectively referred to as a digital signal.

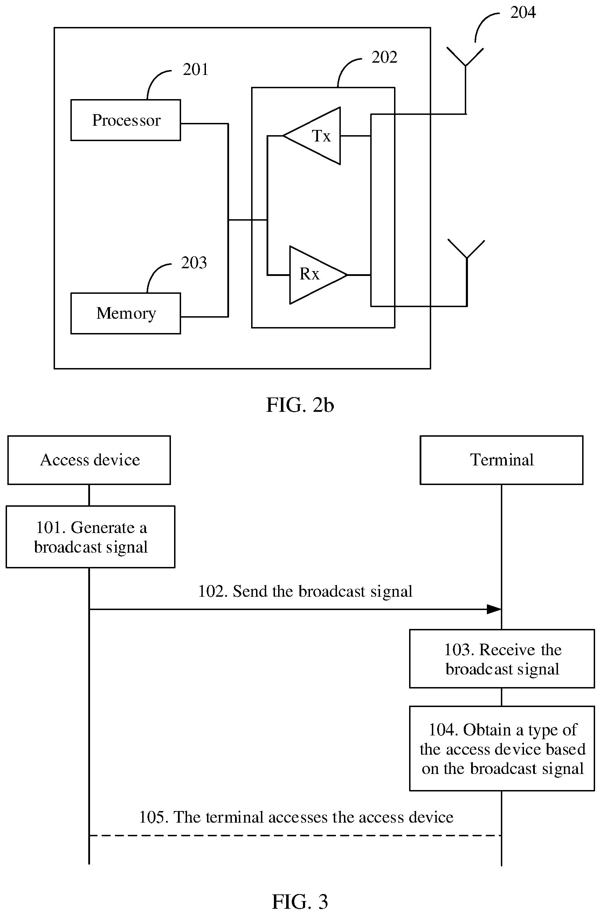

FIG. 2b is a schematic structural diagram of a terminal. In FIG. 2b:
The terminal 300 includes at least one processor 301, at least one transceiver 302, and at least one memory 303. The processor 301, the memory 303, and the transceiver 302 are connected. Optionally, the terminal 300 may further include one or more antennas 304. The antenna 304 is connected to the transceiver 302.

For the transceiver 302, the memory 303, and the antenna 304, refer to related descriptions in FIG. 2a to implement similar functions.

The processor 301 may be a baseband processor, or may be a CPU. The baseband processor and the CPU may be integrated or separated.

The processor 301 may be configured to implement various functions for the terminal 300, for example, configured to process a communications protocol and communication data, or configured to control the entire terminal 300, execute a software program, and process data of the software program. Alternatively, the processor 301 is configured to implement one or more of the foregoing functions.

With reference to FIG. 1, FIG. 3 is a schematic flowchart of a communications method according to an embodiment of this application. In FIG. 3:
Step 101. An access device generates a broadcast signal.

Specifically, in this embodiment of this application, the broadcast signal may include a physical broadcast channel part and a digital channel part, where the physical broadcast channel part includes a primary synchronization signal (Primary Synchronization Signal, PSS), a secondary synchronization signal (Secondary Synchronization Signal, SSS), and a physical broadcast channel (Physical Broadcast Channel, PBCH). The physical broadcast channel part of the broadcast signal may also be referred to as an SS/PBCH block.

Specifically, the access device and the terminal in this application predefine a correspondence between the broadcast signal and a type of the access device. For example, a correspondence between a position of the broadcast signal on a time domain resource and the access device may be used to indicate a type of the access device. In this case, the access device may set the position of the broadcast signal on the time domain resource based on the correspondence and the type of the access device.

In this embodiment of this application, the access device may indicate the type of the access device by setting a position of the broadcast signal in time domain, a position of the broadcast signal in frequency domain, information carried in the broadcast signal (for example, first identification information in this embodiment of this application), and/or a position of information carried in the broadcast signal in time domain, and a position of information carried in the broadcast signal in frequency domain. A specific indication manner is described in detail in the following embodiment.

Optionally, the type of the access device includes a ground base station or a non-ground base station. If the access device is a non-ground base station, the type of the access device includes but is not limited to a high-altitude base station, a low-orbit satellite, a medium-orbit satellite, or a high-orbit satellite.

Step 102. The access device sends the broadcast signal.

Specifically, in this embodiment of this application, the access device (for example, the access device 100 and the access device 200) sends the broadcast signal.

Step 103. A terminal receives the broadcast signal.

Specifically, in this embodiment of this application, after being powered on, the terminal starts an access procedure. Specifically, after being started, the terminal begins to perform cell search, namely, detect whether a broadcast signal sent by any access device exists. Optionally, when the terminal is in a connected state and an idle state (including after the terminal is just started or goes offline from another cell), the terminal may also perform cell search. In the connected state, the terminal may find, through the cell search, a cell with greater strength than the currently accessed cell. In this case, the terminal may perform cell handover. In the idle mode, the terminal may access a cell through the cell search.

In this embodiment of this application, the terminal may receive a broadcast signal sent by one or more access devices. Then, the terminal may select an accessed target access device based on strength of the broadcast signal, and go to step 104, namely, obtain a type of the access device by using the broadcast signal sent by the target access device. Optionally, the terminal may further select an accessed target access device based on a sequence of received broadcast signals. A specific selection manner may be set according to an actual requirement. This is not limited in this application.

Step 104. The terminal obtains a type of the access device based on the broadcast signal.

Specifically, in this embodiment of this application, the terminal may obtain the type of the access device by identifying information of the broadcast signal (for example, a position of the broadcast signal in frequency domain and/or a position of the broadcast signal in time domain), and/or information carried in the broadcast signal (for example, a position of the first identification information carried in the broadcast signal in time domain, a position of the first identification information carried in the broadcast signal in frequency domain, and/or a parameter included in the first identification information). In other words, the terminal may determine, by using the broadcast signal, that the access device is a ground base station or a non-ground base station, and may further determine that the access device is a ground base station, a high-altitude base station, a low-orbit satellite, a medium-orbit satellite, or a high-orbit satellite.

Step 105. The terminal accesses the access device. Specifically, in this embodiment of this application, after obtaining the type of the access device, the terminal may determine a delay type of the access device, and the terminal may determine the delay type to perform a subsequent communication process with the access device. For example, for the terminal, a delay of a ground base station is greater than that of a non-ground base station. By analogy, a delay of a high-orbit satellite is greater than that of a low-orbit satellite. Therefore, after determining the type of the access device, the terminal may obtain a correspondence between the type of the access device and the delay. For example, the terminal may store a correspondence table of types of the access device and delay levels, and the terminal may obtain, by retrieving the correspondence table, a delay level corresponding to a type of an access device that currently needs to be accessed. Then, the terminal may determine a communication manner with the access device based on the delay level of the access device. For example, the terminal may determine a retransmission manner with the access device based on the delay level.

Next, the terminal may obtain a physical-layer cell identity (Physical-layer Cell Identity, PCI) of a target cell (the target cell belongs to the access device) based on a parameter carried in the broadcast signal. Specifically, the terminal may obtain the PCI of the target cell by using a PCI calculation formula. Optionally, the PCI calculation formula may be:

$$N_{ID}^{cell} = 3N_{ID}^{(1)} + N_{ID}^{(2)},$$ where $N_{ID}^{cell}$ is an expression manner of a PCI value specified in the protocol, $N_{ID}^{(2)}$ is determined by the PSS in the broadcast signal, and $N_{ID}^{(1)}$ is determined by the SSS in the broadcast signal.

Specifically, the PSS includes a first-type parameter, and the SSS includes a second-type parameter. The terminal may parse the first-type parameter and the second-type parameter, to obtain a first parameter corresponding to the first-type parameter and a second parameter corresponding to the second-type parameter. Then, the terminal may obtain, through table lookup, a value of $N_{ID}^{(2)}$ corresponding to the first parameter and a value of $N_{ID}^{(1)}$ corresponding to the second parameter.

For example, the PSS includes a pseudo random sequence (hereinafter referred to as a first-type parameter), and the pseudo random sequence may be a ZC (Zadoff-Chu) sequence. The SSS also includes a pseudo random sequence (hereinafter referred to as a second-type parameter), where the first-type parameter is same as or different from the second-type parameter. The terminal may parse the first-type parameter to obtain a first parameter, for example, U0, and parse the second-type parameter to obtain a second parameter, for example, U1. Then, the terminal may obtain, through table lookup, that a value of $N_{ID}^{(2)}$ corresponding to U0 is 1, and a value of $N_{ID}^{(1)}$ corresponding to U1 is 3.

Next, the terminal may obtain that $N_{ID}^{cell}$ is 10 based on the PCI calculation formula, for example, $$N_{ID}^{cell} = 3N_{ID}^{(1)} + N_{ID}^{(2)}.$$ The terminal may access, based on the PCI value, a cell whose PCI value is 10 in the access device. For a specific access process, refer to the current technology. Details are not described in this application.

In conclusion, in the technical solutions in this embodiment of this application, both the ground base station and the non-ground base station can send broadcast signals in a unified format, so that the terminal can obtain the type of the access device by using the broadcast signals, thereby implementing communication convergence between the ground base station and the non-ground base station, and improving resource utilization and user experience.

To make a person skilled in the art better understand the technical solutions of this application, the following describes in detail the communications method in this embodiment of this application.

In this embodiment of this application, the access device may indicate the type of the access device by setting the first identification information carried in the broadcast signal.

Optionally, in an embodiment, the first identification information may be a PSS, or may be an SSS. To be specific, the access device may indicate the type of the access device by setting the PSS or the SSS, and the terminal may determine the type of the access device based on a correspondence between the PSS or the SSS and the type of the access device.

Optionally, in another embodiment, the access device may indicate the type of the access device by setting information about the PSS and the SSS. To be specific, the access device may indicate the type of the access device by setting the PSS and the SSS in the broadcast signal, and the terminal may determine the type of the access device based on a correspondence between the PSS and the SSS and the type of the access device. For example, the terminal may determine, by identifying the PSS, that the access device is a ground base station or a non-ground base station. If the access device is a non-ground base station, the terminal may further determine, by identifying the SSS, that the access device is a high-altitude base station, a low-orbit satellite, a medium-orbit satellite, or a high-orbit satellite.

In this embodiment of this application, the access device may further indicate the type of the access device by using the broadcast signal, that is, a position of a time domain resource of the SS/PBCH block and/or a position of a frequency domain resource of the SS/PBCH block.

The following describes different indication manners in detail.

1. The PSS or the SSS in the broadcast signal may be used to indicate the type of the access device.

An example in which the PSS indicates the type of the access device is used below for detailed description. An indication manner of the SSS is similar to that of the PSS. Details are not described in this application again.

1.1 The first-type parameter included in the PSS may be used to indicate the type of the access device.

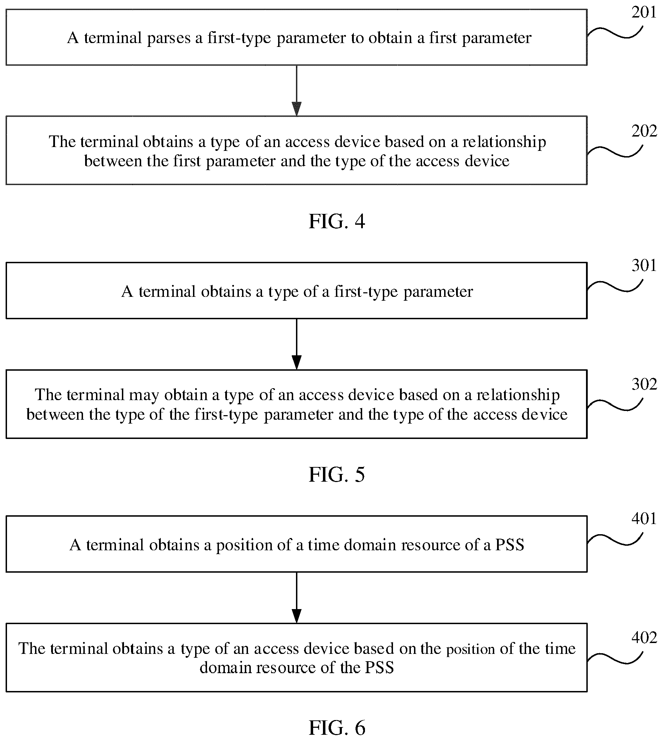

FIG. 4 is a schematic flowchart of obtaining a type of an access device by a terminal according to an embodiment of this application. In FIG. 4:

Step 201. A terminal parses a first-type parameter to obtain a first parameter.

Specifically, in this embodiment of this application, the terminal may extract the first-type parameter included in the PSS in the broadcast signal, and parse the first-type parameter to obtain a first parameter. In this embodiment of this application, the first-type parameter is a sequence for generating a preamble (preamble). Optionally, in an embodiment, the first-type parameter may be a ZC sequence, and in another embodiment, the first-type parameter may be an M sequence.

It should be noted that, at the access device end, the access device may set the first-type parameter based on the type of the access device. For example, if the access device is a low-orbit satellite, the access device may determine that the first parameter corresponding to the low-orbit satellite is U0. In this case, the access device may obtain, through table lookup, the first-type parameter corresponding to U0, for example, A1 (A1 is only used to identify the first-type parameter, and the first-type parameter is actually a sequence), and the access device sets the PSS to A1.

After receiving the broadcast signal, the terminal extracts the first-type parameter included in the PSS, that is, A1, and parses A1 to obtain the first parameter U0.

Step 202. The terminal obtains a type of an access device based on a relationship between the first parameter and the type of the access device.

Then, the terminal may obtain, through table lookup, a correspondence between the first parameter and the type of the access device. For example, the terminal may obtain the type of the access device based on Table 1.

**Table 1**

| $N_{ID}^{(2)}$ | First parameter |
|---|---|
| 0 (ground base station) | U0 |
| 1 (ground base station) | U1 |
| 2 (high-altitude base station) | U2 |
| 3 (low-orbit satellite) | U3 |
| 4 (medium-orbit satellite) | U4 |
| 5 (high-orbit satellite) | U5 |

It should be noted that the correspondence between the first parameter and the type of the access device in Table 1 is merely an example. This is not limited in this application.

With reference to Table 1, the terminal obtains the first parameter U0 by parsing the first-type parameter, and determines, through table lookup, that when the first parameter is U0, a value of the corresponding $N_{ID}^{(2)}$ is 0, and a type of the corresponding access device is a ground base station.

Next, the terminal may continue to perform step 104, namely, obtain the PCI, and perform related steps of accessing the access device.

It should be noted that, as described above, in the current technology, the PCI calculation formula is usually

$$N_{ID}^{cell} = 3N_{ID}^{(1)} + N_{ID}^{(2)},$$ a possible value of $N_{ID}^{(2)}$ is {0, 1, 2}, and a possible value of $N_{ID}^{(1)}$ is {0, 1, 2, ... 335}. In this case, the PCI value ranges from 0 to 1008. However, in this embodiment of this application, because a value of $N_{ID}^{(2)}$ changes, the PCI calculation formula may be correspondingly changed to ensure PCI continuity. For example,

$$N_{ID}^{cell} = KN_{ID}^{(1)} + N_{ID}^{(2)},$$ where a value of K is $N_{ID}^{(2)}+1.$ For example, when a value of $N_{ID}^{(2)}$ is {0, 1, 2, 3, 4, 5}, K is 6.

1.2 The type of the first-type parameter included in the PSS may be used to indicate the type of the access device.

FIG. 5 is a schematic flowchart of obtaining a type of an access device by a terminal according to an embodiment of this application. In FIG. 5:

Step 301. A terminal obtains a type of a first-type parameter.

Specifically, in this embodiment of this application, the access device may indicate the type of the access device by setting the type of the first-type parameter included in the PSS. Correspondingly, the terminal may obtain the type of the corresponding access device by identifying the type of the first-type parameter.

Optionally, in an embodiment, if the first-type parameter is a ZC sequence, it indicates that the access device is a ground base station; and if the first-type parameter is an M sequence, it indicates that the access device is a non-ground base station. If the access device is a non-ground base station, the access device may further indicate a type of the non-ground base station of the access device by setting a value of the M sequence.

Optionally, in another embodiment, if the first-type parameter is an M sequence, it indicates that the access device is a ground base station, and if the first-type parameter is a ZC sequence, it indicates that the access device is a non-ground base station. This is not limited in this application.

Step 302. The terminal may obtain a type of an access device based on a relationship between the type of the first-type parameter and the type of the access device.

Specifically, as described in step 301, the access device and the terminal may specify types of the access device corresponding to different sequences. Then, the terminal may determine, by using the obtained type of the first-type parameter, that the access device is a ground base station or a non-ground base station. If the access device is a non-ground base station, the terminal may further parse the first-type parameter to obtain the type of the access device indicated by a parsed first parameter.

For example, Table 2 shows a correspondence between different types of sequences and types of the access device.

**Table 2**

| $N_{ID}^{(2)}$ | ZC sequence (corresponding to ground base station) | M sequence (corresponding to satellite base station) |
|---|---|---|
| 0 | U0 | M0 (low-orbit satellite) |
| 1 | U1 | M1 (medium-orbit satellite) |
| 2 | U2 | M2 (high-orbit satellite) |
| 3 | U3 | M3 (high-altitude base station) |

With reference to Table 2, the terminal obtains a type of the first-type parameter, and if the type of the first-type parameter is a ZC sequence, determines that the access device is a ground base station. The terminal may go to step 104, namely, parse the first-type parameter to obtain a corresponding first parameter, and obtain a value of the corre-sponding $N_{ID}^{(2)}$ through table lookup. The terminal may also parse the SSS to obtain a value of $N_{ID}^{(1)}$, and calculate a PCI. If the type of the first-type parameter is an M sequence, it is determined that the access device is a non-ground base station. The terminal may continue to parse the first-type parameter, to obtain a first parameter, for example, M0. The terminal may obtain, through table lookup, that the type of the access device corresponding to the first parameter M0 is a low-orbit satellite, and the value of $N_{ID}^{(2)}$ is 0. The terminal continues to perform the PCI calculation step.

1.3 The position of a time domain resource of the PSS may be used to indicate the type of the access device.

FIG. 6 is a schematic flowchart of obtaining a type of an access device by a terminal according to an embodiment of this application. In FIG. 6:

Step 401. A terminal obtains a position of a time domain resource of a PSS.

Specifically, in this embodiment of this application, the terminal may obtain the position of a time domain resource of the PSS in the broadcast signal.

Optionally, in an embodiment, the position of a time domain resource of the PSS may be an offset value N between a position of the PSS on a time domain resource to which the broadcast signal belongs and a position of the PSS on a time domain resource specified in the standard. In other words, in the protocol in the current technology, the PSS and/or the SSS have/has a fixed time domain resource allocation solution. In this application, an offset value N obtained after the PSS or the SSS in the broadcast signal or both are translated from the position specified in the current technology (the translation may be left translation or right translation) may be used to identify the type of the access device. For example, in the current technology, the protocol specifies that the position of the PSS on the time domain resource is a symbol bit 16. In this application, the position of the PSS on the time domain resource obtained by the terminal is a symbol bit 12. In this case, the terminal obtains the offset value N, namely, the position of a time domain resource of the PSS is 4.

Optionally, in another embodiment, the position of a time domain resource of the PSS may also be directly used to indicate a current position of the PSS on the time domain resource. For example, if the position of the PSS on the time domain resource is a symbol bit 16, the position of a time domain resource of the PSS obtained by the terminal is 16.

Optionally, all the positions in this application are start positions of the time domain resource. For example, that the position of the PSS on the time domain resource is a symbol bit 16 means that the start position of the PSS is the 16th bit of the symbol bit on the time domain resource.

Step 402. The terminal obtains a type of an access device based on the position of a time domain resource of the PSS.

Specifically, in this embodiment of this application, the terminal may obtain the type of the access device based on a correspondence between the position of a time domain resource of the PSS and the type of the access device.

Optionally, if the position of a time domain resource of the PSS is the foregoing offset value N, the terminal may determine the type of the access device based on a value of the offset value N. For example, if the offset value N falls within a first interval, it may be determined that the access device is a ground base station. If N falls within a second interval, it may be determined that the access device is a high-altitude base station. If N falls within a third interval, it may be determined that the access device is a low-orbit satellite. If N falls within a fourth interval, it may be determined that the access device is a medium-orbit satellite. If N falls within a fifth interval, it may be determined that the access device is a high-orbit satellite. It should be noted that the foregoing interval division may be set based on an actual requirement. This is not limited in this application.

Optionally, if the position of a time domain resource of the PSS is the foregoing actual position of the PSS on the time domain resource, the terminal may obtain the type of the access device based on a correspondence between positions of different time domain resources of the PSS and types of the access device. In other words, the access device and the terminal in this embodiment of this application may predefine types of the access device corresponding to positions of different time domain resources. For example, the position {2, 8, 16, 22} of the time domain resource of the PSS indicates that the access device is a ground base station, {1, 7, 13, 19} indicates that the access device is a low-orbit satellite base station, {3, 9, 12, 17} indicates that the access device is a medium-orbit satellite base station, and {4, 10, 15, 18} indicates that the access device is a high-orbit satellite.

1.4. The position of the PSS on the frequency domain resource may be used to indicate the type of the access device.

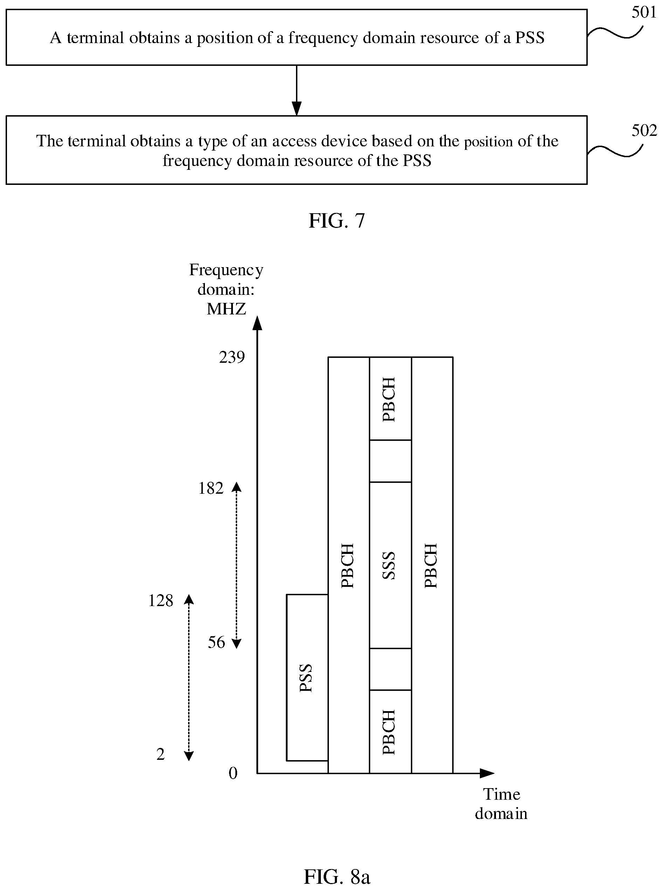

FIG. 7 is a schematic flowchart of obtaining a type of an access device by a terminal according to an embodiment of this application. In FIG. 7:

Step 501. A terminal obtains a position of a frequency domain resource of a PSS.

Specifically, in this embodiment of this application, the terminal may obtain the position of a frequency domain resource of the PSS in the broadcast signal. The position of a frequency domain resource includes a size and/or a start position of a resource block occupied by the PSS on a frequency domain resource to which the broadcast signal belongs.

Optionally, in an embodiment, the size of the resource block occupied by the PSS on the frequency domain resource may be used to indicate the type of the access device (the type includes a ground base station, a high-altitude base station, a low-orbit satellite, a medium-orbit satellite, or a high-orbit satellite).

Optionally, in another embodiment, the start position of the resource block occupied by the PSS on the frequency domain resource may be used to indicate the type of the access device (the type includes a ground base station, a high-altitude base station, a low-orbit satellite, a medium-orbit satellite, or a high-orbit satellite).

Optionally, in still another embodiment, the size and the start position of the resource block occupied by the PSS on the frequency domain resource may be used to indicate the type of the access device. The size of the resource block occupied by the PSS on the frequency domain resource may be used to indicate that the access device is a ground base station or a non-ground base station (for example, if the size of the occupied resource block exceeds a threshold, it indicates that the access device is a non-ground base station; otherwise, the access device is a ground base station). If the access device is a non-ground base station, the start position of the occupied resource block may be used to indicate that the access device is a high-altitude base station, a low-orbit satellite, a medium-orbit satellite, or a high-orbit satellite. On the contrary, if the start position of the occupied resource block is used to indicate a ground base station or a non-ground base station, the size of the occupied resource block is used to indicate a high-altitude base station, a low-orbit satellite, a medium-orbit satellite, or a high-orbit satellite.

Step 502. The terminal obtains a type of an access device based on the position of a frequency domain resource of the PSS.

Specifically, in this embodiment of this application, the base station may obtain the type of the access device based on a correspondence between the obtained position of the frequency domain resource and the type of the access device. As described in step 501, there is a correspondence between the position of a frequency domain resource of the PSS and the type of the access device.

For example, FIG. 8a to FIG. 8j are schematic diagrams of positions of frequency domain resources of a broadcast signal. A frequency domain resource to which the broadcast signal belongs is 0 MHz to 239 MHz.

In this embodiment, the start position of the resource block occupied by the PSS (hereinafter referred to as the start position) is used as an example for detailed description. Specifically, the access device and the terminal may predefine a correspondence between different start positions and the access device. In this embodiment, for example, the start position {2, 10, 26, 38} (unit: MHz) is used to indicate that the access device is a ground base station; the start position {3, 11, 27, 39} is used to indicate that the access device is a high-altitude base station; the start position {4, 12, 28, 40} is used to indicate that the access device is a low-orbit satellite; the start position {5, 13, 29, 41} is used to indicate that the access device is a medium-orbit satellite; and the start position {6, 14, 30, 42} is used to indicate that the access device is a high-orbit satellite.

As shown in FIG. 8a, the start position of the PSS is 2 MHz, and the terminal may determine that the access device is a ground base station.

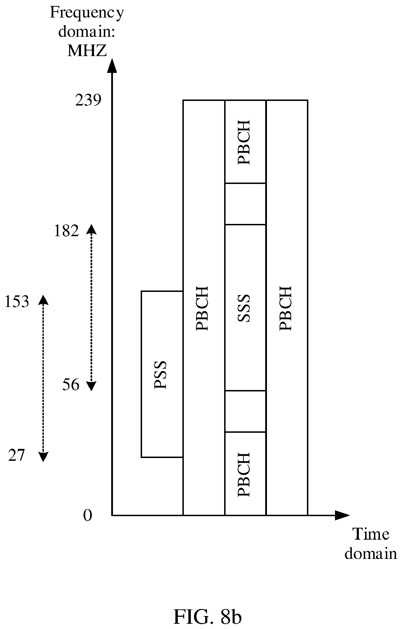

As shown in FIG. 8b, the start position of the PSS is 27 MHz, and the terminal may determine that the access device is a high-altitude base station.

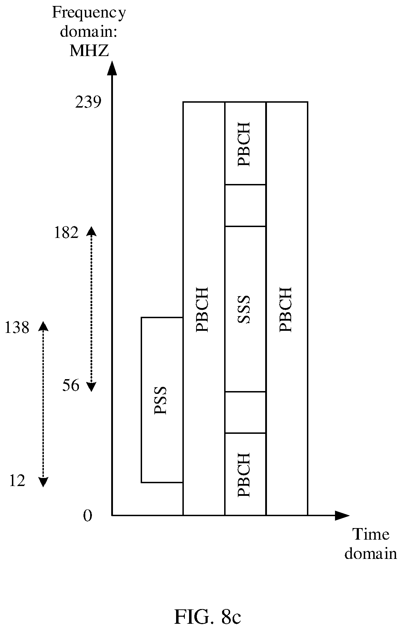

As shown in FIG. 8c, the start position of the PSS is 12 MHz, and the terminal may determine that the access device is a low-orbit satellite.

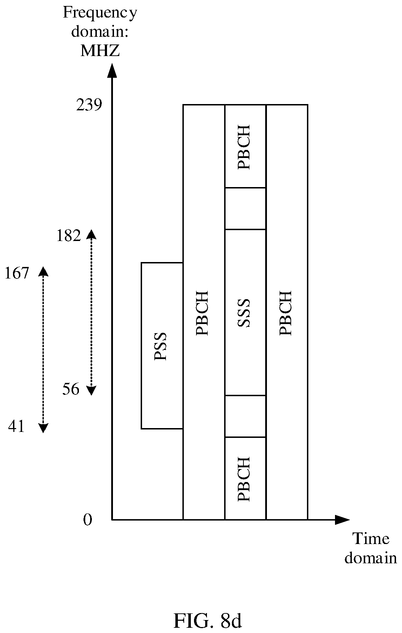

As shown in FIG. 8d, the start position of the PSS is 41 MHz, and the terminal may determine that the access device is a medium-orbit satellite.

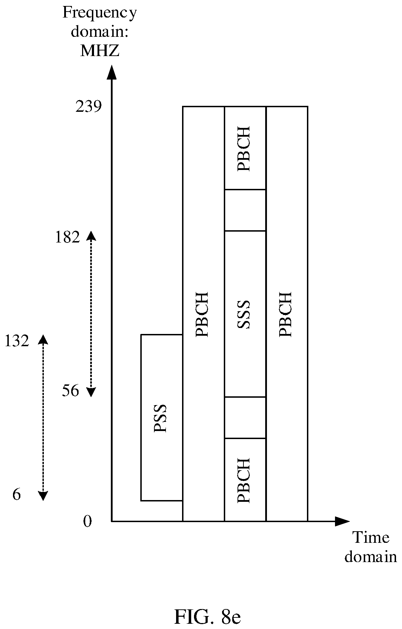

As shown in FIG. 8e, the start position of the PSS is 6 MHz, and the terminal may determine that the access device is a high-orbit satellite.

The following uses an example in which the size of the resource block occupied by the PSS indicates the type of the access device for detailed description. Specifically, the access device and the terminal may predefine a correspondence between sizes of different resource blocks and the access device. In this embodiment, different intervals of the size of the resource block are used as an example. For example, if the size of the resource block is (0, 47 MHz], it indicates that the access device is a ground base station; if the size of the resource block is (47 MHz, 56 MHz], it indicates that the access device is a high-altitude base station; if the size of the resource block is (56 MHz, 120 MHz], it indicates that the access device is a low-orbit satellite; if the size of the resource block is (120 MHz, 170 MHz], it indicates that the access device is a medium-orbit satellite; and if the size of the resource block is (170 MHz, 239 MHz], it indicates that the access device is a high-orbit satellite.

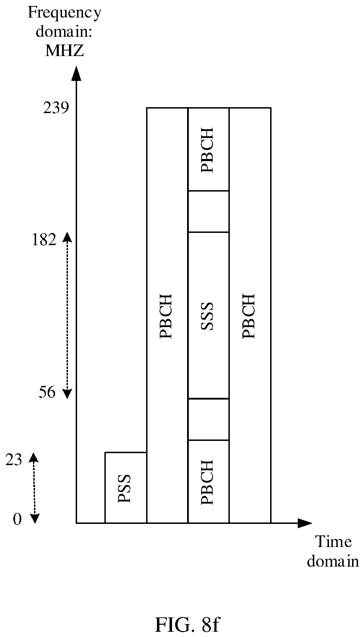

As shown in FIG. 8f, the size of the resource block of the PSS is 23 MHz, and the terminal may determine that the access device is a ground base station.

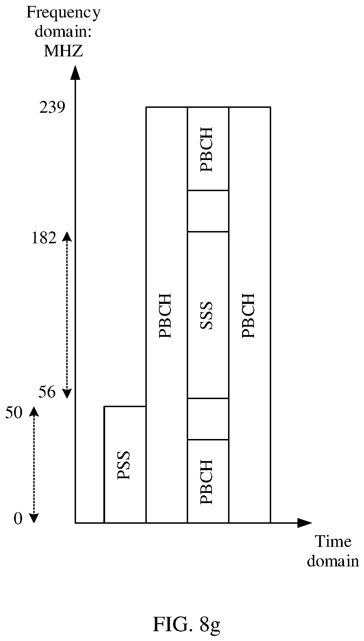

As shown in FIG. 8g, the size of the resource block of the PSS is 50 MHz, and the terminal may determine that the access device is a high-altitude base station.

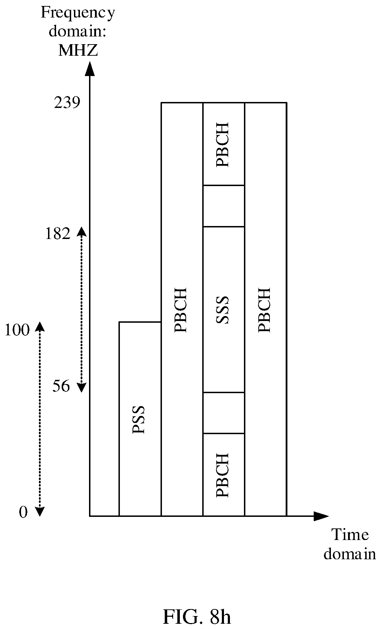

As shown in FIG. 8h, the size of the resource block of the PSS is 100 MHz, and the terminal may determine that the access device is a low-orbit satellite.

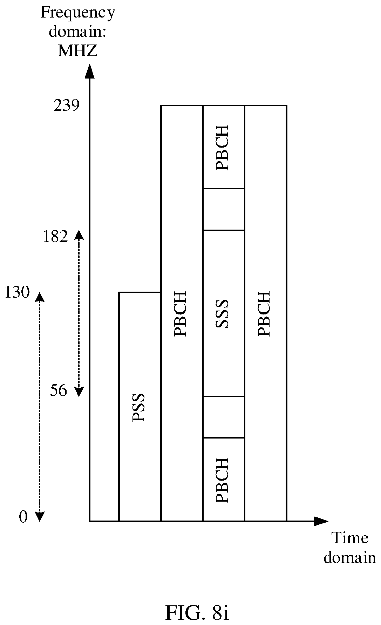

As shown in FIG. 8i, the size of the resource block of the PSS is 130 MHz, and the terminal may determine that the access device is a medium-orbit satellite.

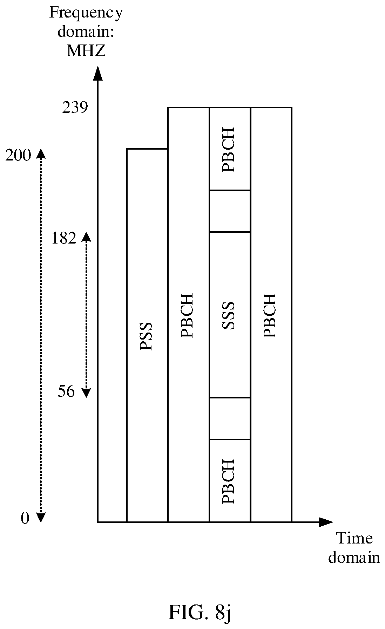

As shown in FIG. 8j, the size of the resource block of the PSS is 200 MHz, and the terminal may determine that the access device is a high-orbit satellite.

In the foregoing embodiment, only a single condition is used to indicate the type of the access device. For example, the first-type parameter included in the PSS may indicate the type of the access device. In this embodiment of this application, the type of the access device may be further indicated in a manner of any combination of a plurality of conditions.

Optionally, in an embodiment, the first-type parameter included in the PSS may indicate the type of the access device with reference to the position of a time domain resource or the position of a frequency domain resource. For example, the type of the first-type parameter included in the PSS may be used to indicate that the access device is a ground base station or a non-ground base station. When the access device is a non-ground base station, the terminal may further obtain the position of the PSS on the time domain resource or the position of the PSS on the frequency domain resource, to obtain, based on a correspondence between the position of a time domain resource or the position of a frequency domain resource and the type of the access device, that the access device is a high-altitude base station, a low-orbit satellite, a medium-orbit satellite, or a high-orbit satellite. On the contrary, the position of a time domain resource of the PSS or the position of a frequency domain resource of the PSS may be further used to indicate that the access device is a ground base station or a non-ground base station. If the access device is a non-ground base station, the terminal may further parse the first-type parameter of the PSS to obtain a parsed first parameter, and determine the type of the access device based on a correspondence between the first parameter and a high-altitude base station, a low-orbit satellite, a medium-orbit satellite, or a high-orbit satellite.

Optionally, in another embodiment, the position of a time domain resource of the PSS may indicate the type of the access device with reference to the position of a frequency domain resource. For example, the position of a time domain resource of the PSS may be used to indicate that the access device is a ground base station or a non-ground base station. If the access device is a non-ground base station, the terminal may further obtain the position of the PSS on the frequency domain resource, to obtain, based on a correspondence between the position of a frequency domain resource and the type of the access device, that the access device is a high-altitude base station, a low-orbit satellite, a medium-orbit satellite, or a high-orbit satellite. On the contrary, the position of a frequency domain resource of the PSS may be further used to indicate that the access device is a ground base station or a non-ground base station. If the access device is a non-ground base station, the terminal may further obtain the position of the PSS on the time domain resource, to obtain, based on a correspondence between the position of a time domain resource and the type of the access device, that the access device is a high-altitude base station, a low-orbit satellite, a medium-orbit satellite, or a high-orbit satellite.

2. The PSS and the SSS in the broadcast signal may be used to jointly indicate the type of the access device.

In an embodiment, the PSS may be used to indicate that the access device is a ground base station or a non-ground base station. In other words, the terminal may obtain, based on a correspondence between the PSS and the type of the access device, that the access device is a ground base station or a non-ground base station. If the access device is a non-ground base station, the SSS may be used to indicate that the access device is a high-altitude base station, a low-orbit satellite, a medium-orbit satellite, or a high-orbit satellite. In other words, the terminal may further obtain, based on a relationship between the SSS and the type of the access device, that the access device is a high-altitude base station, a low-orbit satellite, a medium-orbit satellite, or a high-orbit satellite.

In another embodiment, the SSS may be used to indicate that the access device is a ground base station or a non-ground base station, and the PSS may be used to indicate that the access device is a high-altitude base station, a low-orbit satellite, a medium-orbit satellite, or a high-orbit satellite.

The following provides detailed description by using an example in which the PSS indicates that the access device is a ground base station or a non-ground base station, and the SSS indicates that the access device is a high-altitude base station, a low-orbit satellite, a medium-orbit satellite, or a high-orbit satellite.

2.1 The first-type parameter included in the PSS is used to indicate that the access device is a ground base station or a non-ground base station, and the second-type parameter included in the SSS is used to indicate that the access device is a high-altitude base station, a low-orbit satellite, a medium-orbit satellite, or a high-orbit satellite.

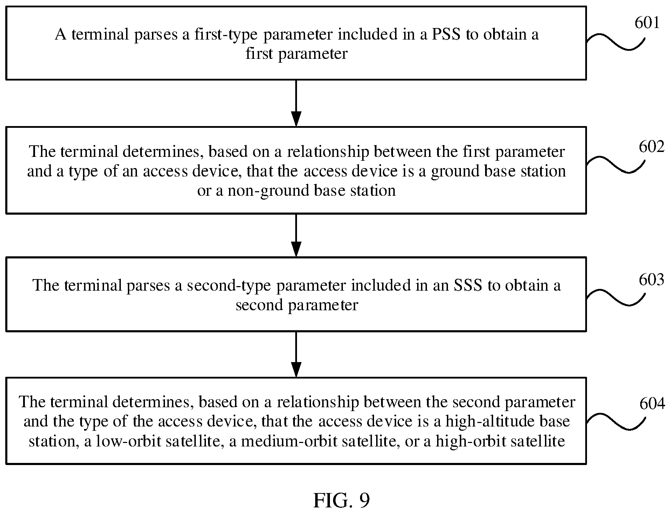

FIG. 9 is a schematic flowchart of obtaining a type of an access device by a terminal according to an embodiment of this application. In FIG. 9:

Step 601. A terminal parses a first-type parameter included in a PSS to obtain a first parameter.

For specific details, refer to step 201. Details are not described herein again.

Step 602. The terminal determines, based on a relationship between the first parameter and a type of an access device, that the access device is a ground base station or a non-ground base station.

Specifically, in this embodiment of this application, the access device and the terminal may specify a correspondence between the first parameter and the type of the access device, to indicate the type of the access device.

Optionally, in an embodiment, it may be determined that the access device is a ground base station or a non-ground base station by setting a value range of the value of $N_{ID}^{(2)}$ corresponding to the first parameter. For example, a quantity of ground base stations is limited and a corresponding sequence number may be preset for an access device belonging to a ground base station. For example, if there are 1000 ground base stations, if the value of $N_{ID}^{(2)}$ is less than or equal to 1000, it may be determined that the access device is a ground base station. If the value of $N_{ID}^{(2)}$ is greater than 1000, it may be determined that the access device is a non-ground base station.

In another embodiment, a correspondence between the value of $N_{ID}^{(2)}$ and thee type of the access device may also be directly specified. For example, when the value of $N_{ID}^{(2)}$ corresponding to the parsed first parameter is {0, 1, 2, 3, 4}, it indicates that the access device is a ground base station. If the value is not within the interval, it indicates that the access device is a non-ground base station.

In this embodiment of this application, if the terminal determines that the access device is a non-ground base station, step 603 is performed.

Step 603. The terminal parses a second-type parameter included in an SSS to obtain a second parameter.

For specific details, refer to the parsing process of the first-type parameter. Details are not described herein again.

Step 604. The terminal determines, based on a relationship between the second parameter and the type of the access device, that the access device is a high-altitude base station, a low-orbit satellite, a medium-orbit satellite, or a high-orbit satellite.

For specific details, refer to step 202. Details are not described herein again.

2.2 The position of a time domain resource of the PSS and the position of a time domain resource of the SSS jointly indicate the type of the access device.Optionally, in an embodiment, the position of a time domain resource of the PSS may be used to indicate that the access device is a ground base station or a non-ground base station. If the access device is a non-ground base station, the position of a time domain resource of the SSS may be used to indicate that the access device is a high-altitude base station, a low-orbit satellite, a medium-orbit satellite, or a high-orbit satellite.

Optionally, in another embodiment, the position of a time domain resource of the PSS and the position of a time domain resource of the SSS may jointly indicate that the access device is a ground base station a high-altitude base station a low-orbit satellite a medium-orbit satellite or a high-orbit satellite. For example, when the position of a time domain resource of the PSS is 0 and the position of a time domain resource of the SSS is 2, it indicates that the access device is a ground base station; when the position of a time domain resource of the PSS is 1 and the position of a time domain resource of the SSS is 3, it indicates that the access device is a high-altitude base station; when the position of a time domain resource of the PSS is 3, and the position of a time domain resource of the SSS is 5, it indicates that the access device is a low-orbit satellite; when the position of a time domain resource of the PSS is 4 and the position of a time domain resource of the SSS is 6, it indicates that the access device is a medium-orbit satellite; and when the position of a time domain resource of the PSS is 5, and the position of a time domain resource of the SSS is 7, it indicates that the access device is a high-orbit satellite. For example, a size of a position between the position of a time domain resource of the PSS and the position of a time domain resource of the SSS may be further used to indicate the type of the access device. For example, when a size of a symbol bit between the position of a time domain resource of the PSS and the position of a time domain resource of the SSS meets a first interval (for example, (0, 3]), it indicates that the access device is a ground base station; when the size of the symbol bit between the position of a time domain resource of the PSS and the position of a time domain resource of the SSS meets a second interval, it indicates that the access device is a high-altitude base station; when the size of the symbol bit between the position of a time domain resource of the PSS and the position of a time domain resource of the SSS meets a third interval, it indicates that the access device is a low-orbit satellite; when the size of the symbol bit between the position of a time domain resource of the PSS and the position of a time domain resource of the SSS meets a fourth interval, it indicates that the access device is a medium-orbit satellite; and when the size of the symbol bit between the position of a time domain resource of the PSS and the position of a time domain resource of the SSS meets a fifth interval, it indicates that the access device is a high-orbit satellite.

In this embodiment, the terminal may obtain the type of the access device based on a relationship between the position of a time domain resource of the PSS and/or the position of a time domain resource of the SSS and the type of the access device. For specific details, refer to the foregoing embodiment. Details are not described herein again.

2.3 The position of a frequency domain resource of the PSS and the position of a frequency domain resource of the SSS jointly indicate the type of the access device.

Optionally, in an embodiment, the position of a frequency domain resource of the PSS may be used to indicate that the access device is a ground base station or a non-ground base station. If the access device is a non-ground base station, the position of a frequency domain resource of the SSS may be used to indicate that the access device is a high-altitude base station, a low-orbit satellite, a medium-orbit satellite, or a high-orbit satellite. The position of a frequency domain resource may be a size of a resource block, or may be a start position of a resource block. For example, if the size of the resource block occupied by the PSS on the frequency domain resource is greater than or equal to a threshold, it indicates that the access device is a ground base station; otherwise, it indicates that the access device is a non-ground base station. If the access device is a non-ground base station, the size of the resource block occupied by the SSS on the frequency domain resource may further indicate that the access device is a high-altitude base station, a low-orbit satellite, a medium-orbit satellite, or a high-orbit satellite. In addition, the start position of the resource block occupied by the PSS on the frequency domain resource may be used to indicate that the access device is a ground base station or a non-ground base station, and the start position of the resource block occupied by the SSS on the frequency domain resource may be used to indicate that the access device is a high-altitude base station, a low-orbit satellite, a medium-orbit satellite, or a high-orbit satellite. Alternatively, the start position of the resource block occupied by the PSS on the frequency domain resource may be used to indicate that the access device is a ground base station or a non-ground base station, and the size of the resource block occupied by the SSS on the frequency domain resource may be used to indicate that the access device is a high-altitude base station, a low-orbit satellite, a medium-orbit satellite, or a high-orbit satellite.

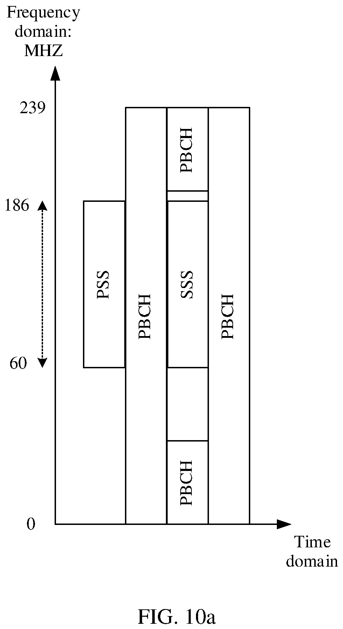

Optionally, in another embodiment, the position of a frequency domain resource of the PSS and the position of a frequency domain resource of the SSS may jointly indicate that the access device is a ground base station, a high-altitude base station, a low-orbit satellite, a medium-orbit satellite, or a high-orbit satellite. To be specific, relative positions of the PSS and the SSS on the frequency domain resources may indicate the type of the access device. FIG. 10a to FIG. 10e show several possible frequency domain resource allocation manners of the PSS and the SSS. The access device and the terminal may predefine a correspondence between different frequency domain resource allocation manners and types of the access device, so that the terminal can obtain the type of the access device based on a relationship between positions of frequency domain resources of the PSS and the SSS and types of the access device.

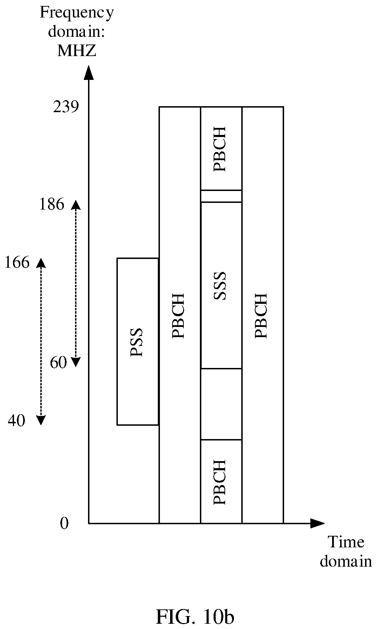

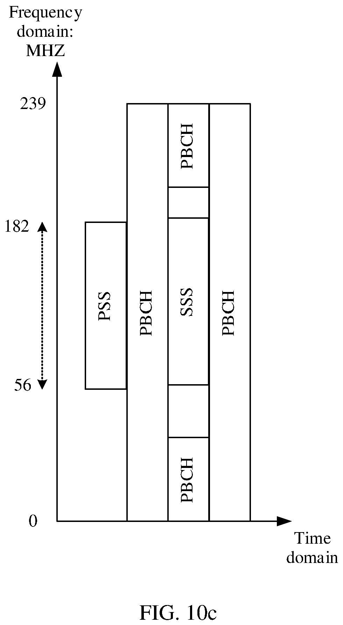

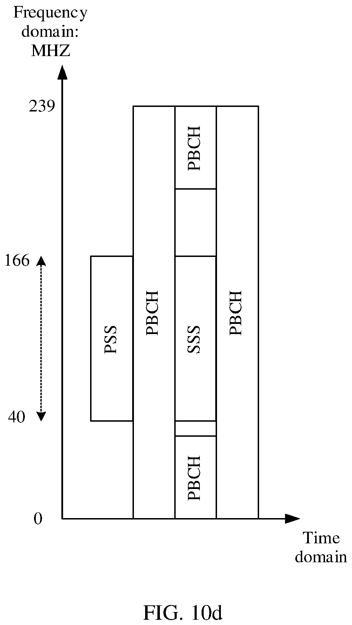

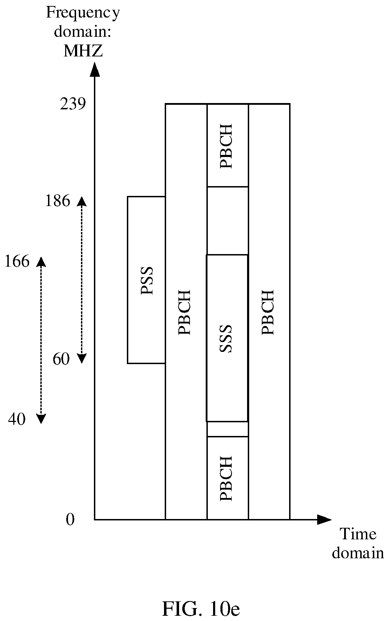

With reference to FIG. 10a to FIG. 10e, in FIG. 10a, both start positions of frequency domain resources of the PSS and the SSS (hereinafter referred to as start positions) are 60 MHZ, indicating that the access device is a ground base station. In FIG. 10b, the start position of the PSS is 40, and the start position of the SSS is 60, indicating that the access device is a high-altitude base station. In FIG. 10c, both the start position of the PSS and the start position of the SSS are 56, indicating that the access device is a low-orbit satellite. In FIG. 10d, both the start position of the PSS and the start position of the SSS are 40, indicating that the access device is a medium-orbit satellite. In FIG. 10e, the start position of the PSS is 60, and the start position of the SSS is 40, indicating that the access device is a high-orbit satellite.

It should be noted that, in FIG. 10a to FIG. 10e, sizes of resource blocks occupied by the PSS and the SSS on the frequency domain resources are fixed values. In an embodiment, the type of the access device may also be indicated in a manner of combining the size and the start position of the resource block occupied by the PSS or the SSS on the frequency domain resource. For example, if the size of the resource block occupied by the PSS on the frequency domain resource is equal to a threshold (for example, 100 MHz), the access device is a non-ground base station; and if the size is less than the threshold, the access device is a ground base station. When the access device is a non-ground base station, the terminal may determine, based on the start position of the resource block occupied by the SSS on the frequency domain resource, that the access device is a high-altitude base station, a low-orbit satellite, a medium-orbit satellite, or a high-orbit satellite. For example, if the start position of the SSS meets a first interval (which may be set according to an actual requirement, for example, (0, 20 MHz)), it may be determined that the access device is a high-altitude base station; if the start position of the SSS meets a second interval, it may be determined that the access device is a low-orbit satellite; if the start position of the SSS meets a third interval, it may be determined that the access device is a medium-orbit satellite; and if the start position of the SSS meets a fourth interval, it may be determined that the access device is a high-orbit satellite.

2.4 The positions of the time domain resources of the PSS and the SSS and the positions of the frequency domain resources of the PSS and the SSS jointly indicate the type of the access device.

Specifically, in this embodiment of this application, the access device and the terminal may predefine a correspondence between positions of the PSS and the SSS on the time domain resources and positions of the PSS and the SSS on the frequency domain resources and types of the access device.

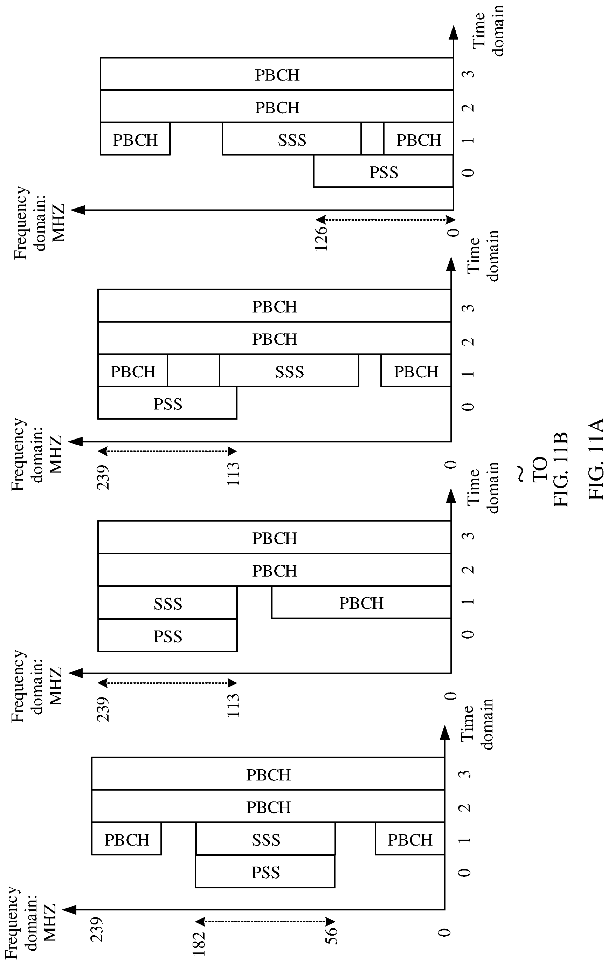

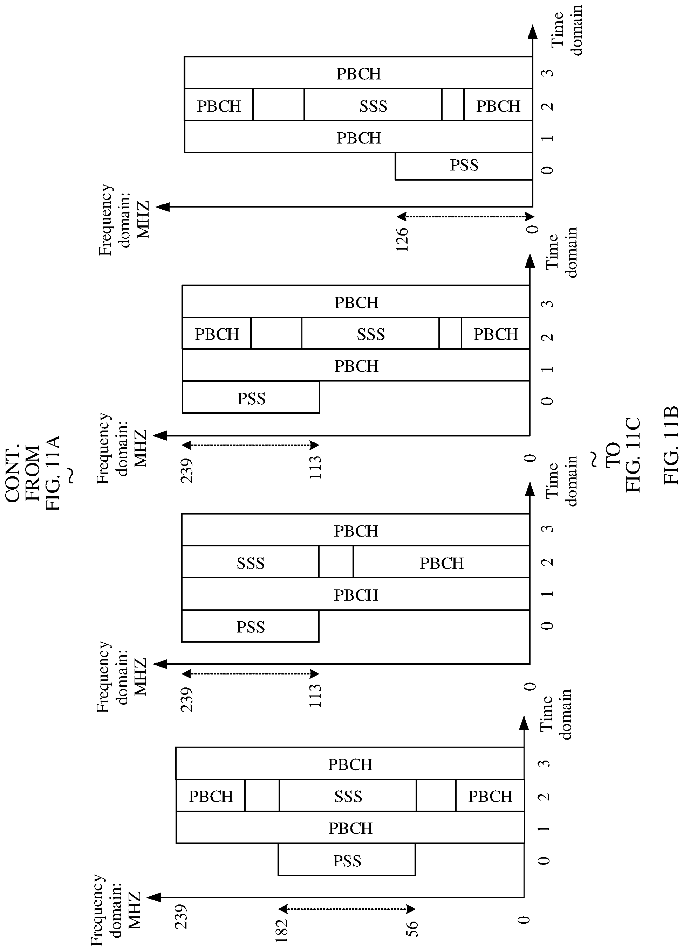

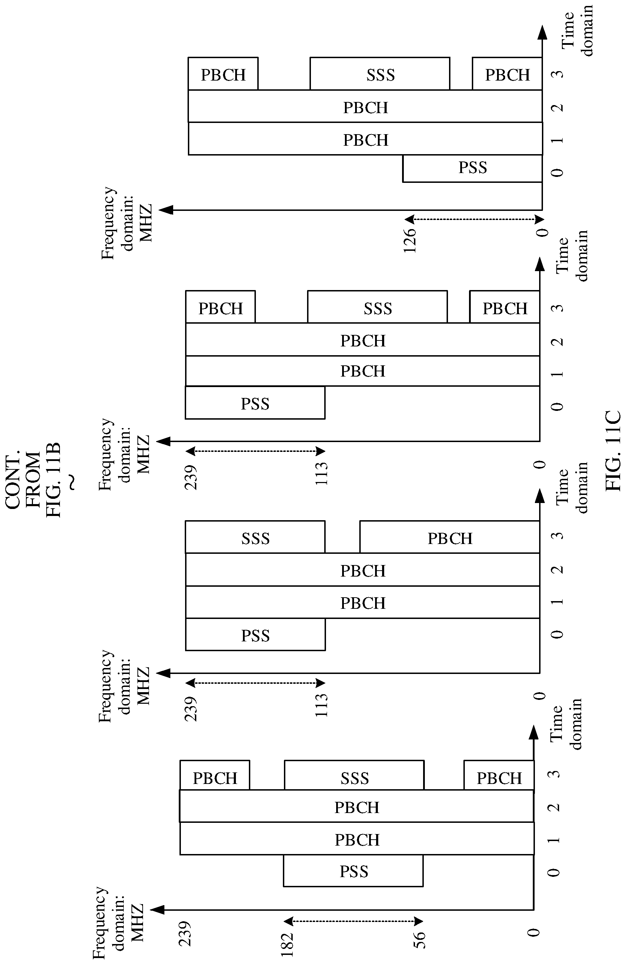

FIG. 11A, FIG. 11B and FIG. 11C show several possible time domain resource allocation manners and frequency domain resource allocation manners of the PSS and the SSS. In this embodiment, the access device and the terminal may select, from FIG. 11A, FIG. 11B and FIG. 11C, a time domain resource allocation manner and a frequency domain resource allocation manner of the PSS and the SSS to establish a correspondence with the type of the access device, so that when generating a broadcast signal, the access device may set positions of the time domain resources and the frequency domain resources of the PSS and the SSS based on the correspondence, and the terminal may obtain the type of the access device based on a correspondence between the time domain resources and the frequency domain resources of the PSS and the SSS and the types of the access device.

Referring to FIG. 11A, FIG. 11B and FIG. 11C, in an embodiment, positions of the PSS and the SSS on the time domain resources may indicate that the access device is a ground type or a non-ground type. For example, when the position of the PSS on the time domain resource is 0, the position of the SSS on the time domain resource is 1, the position of the PSS on the time domain resource is 0, and the position of the SSS on the time domain resource is 2, it indicates that the access device is a ground base station. When the position of the PSS on the time domain resource is 0, the position of the SSS on the time domain resource is 3, the position of the PSS on the time domain resource is 0, and the position of the SSS on the time domain resource is 4, it indicates that the access device is a non-ground base station. If the access device is a non-ground base station, it may be further obtained, based on the sizes and the start positions of the frequency domain resources of the PSS and the SSS, that the access device is a high-altitude base station, a low-orbit satellite, a medium-orbit satellite, or a high-orbit satellite.

In another embodiment, it may be further obtained, based on the sizes of the PSS and the SSS on the frequency domain resources, that the access device is a ground base station or a non-ground base station. For example, when the size of the PSS is the same as that of the SSS, the access device is a ground base station; and when the size of the PSS is different from that of the SSS, the access device is a non-ground base station. When the access device is a non-ground base station, the type of the access device is further obtained based on positions of the PSS and the SSS on the time domain resources. For example, when the position of the PSS on the time domain resource is 0 and the position of the SSS on the time domain resource is 1, the access device is a high-altitude base station; when the position of the PSS on the time domain resource is 0 and the position of the SSS on the time domain resource is 2, the access device is a low-orbit satellite; when the position of the PSS on the time domain resource is 0 and the position of the SSS on the time domain resource is 3, the access device is a medium-orbit satellite; and when the position of the PSS on the time domain resource is 1, and the position of the SSS on the time domain resource is 2, the access device is a high-orbit satellite.

In addition, in this embodiment of this application, a manner in which the PSS and the SSS jointly indicate the type of the access device may alternatively be any combination of the foregoing manners.

Optionally, in an embodiment, it may be determined, based on a relationship between the first-type parameter included in the PSS and the type of the access device, that the access device is a ground base station or a non-ground base station. If the access device is a non-ground base station, it may further indicate, by using positions of time domain resources and/or frequency domain resources of the PSS and the SSS, and/or positions of frequency domain resources and/or frequency domain resources of the SSS, that the access device is a high-altitude base station, a low-orbit satellite, a medium-orbit satellite, or a high-orbit satellite.

In another embodiment, it may be determined, based on a relationship between the type of the first-type parameter included in the PSS and the type of the access device, that the access device is a ground base station or a non-ground base station. If the access device is a non-ground base station, it may further indicate, by using positions of time domain resources and/or frequency domain resources of the PSS and the SSS, and/or positions of frequency domain resources and/or frequency domain resources of the SSS, that the access device is a high-altitude base station, a low-orbit satellite, a medium-orbit satellite, or a high-orbit satellite.

In still another embodiment, it may be determined, based on the position of a time domain resource and/or the frequency domain resource of the PSS, that the access device is a ground base station or a non-ground base station. If the access device is a non-ground base station, it may further determine, based on a relationship between the second-type parameter included in the SSS and the access device, that the access device is a high-altitude base station, a low-orbit satellite, a medium-orbit satellite, or a high-orbit satellite.

3. A position of a time domain resource of an SS/PBCH block and/or a position of a frequency domain resource of an SS/PBCH block are/is used to indicate the type of the access device.

3.1 The position of a time domain resource of the SS/PBCH block is used to indicate the type of the access device.

Specifically, in this embodiment of this application, the access device and the terminal may predefine a correspondence between different start positions of the SS/PBCH block on the time domain resource and types of the access device, so that the terminal may determine, based on an obtained position of the time domain resource of the SS/PBCH block, that the access device is a ground base station, a high-altitude base station, a low-orbit satellite, a medium-orbit satellite, or a high-orbit satellite. The manner in which the position of a time domain resource of the SS/PBCH block indicates the type of the access device is similar to the manner in which the position of a time domain resource of the PSS indicates the type of the access device in the foregoing embodiment. Details are not described herein again.

3.2 The position of a time domain resource of the SS/PBCH block and a PSS and an SSS in the SS/PBCH block jointly indicate the type of the access device.

In this embodiment of this application, the position of a time domain resource of the SS/PBCH block may be used to indicate that the access device is a ground base station or a non-ground base station. If the access device is a non-ground base station, it may be further determined, by using the PSS and the SSS, that the access device is a high-altitude base station, a low-orbit satellite, a medium-orbit satellite, or a high-orbit satellite.

Optionally, in an embodiment, if the access device is a non-ground base station, it may be further obtained, by using a relationship between a position of a time domain resource of the PSS and/or a position of a frequency domain resource of the PSS and the type of the access device, that the access device is a high-altitude base station, a low-orbit satellite, a medium-orbit satellite, or a high-orbit satellite.

In another embodiment, if the access device is a non-ground base station, it may be further obtained, based on a relationship between a position of a time domain resource of the SSS and/or a position of a frequency domain resource of the SSS and the type of the access device, that the access device is a high-altitude base station, a low-orbit satellite, a medium-orbit satellite, or a high-orbit satellite.

In still another embodiment, if the access device is a non-ground base station, it may be further obtained, based on a relationship between positions of time domain resources of the PSS and the SSS and/or positions of frequency domain resources of the PSS and the SSS and types of the access device, that the access device is a high-altitude base station, a low-orbit satellite, a medium-orbit satellite, or a high-orbit satellite. For example, it may be further determined, based on a relationship between positions of time domain resources of the PSS and the SSS and types of the access device, that the access device is a high-altitude base station, a low-orbit satellite, a medium-orbit satellite, or a high-orbit satellite. It may be further determined, based on a relationship between sizes and/or relative positions of the PSS and the SSS on the frequency domain resources and types of the access device, that the access device is a high-altitude base station, a low-orbit satellite, a medium-orbit satellite, or a high-orbit satellite.

In still another embodiment, if the access device is a non-ground base station, it may be further determined, based on a relationship between the first-type parameter included in the PSS or the second-type parameter included in the SSS and the access device, that the access device is a high-altitude base station, a low-orbit satellite, a medium-orbit satellite, or a high-orbit satellite. In other words, the terminal may further parse the first-type parameter included in the PSS or the second-type parameter included in the SSS, to obtain a first parameter or a second parameter, and determine, based on a relationship between the first parameter or the second parameter and the type of the access device, that the access device is a high-altitude base station, a low-orbit satellite, a medium-orbit satellite, or a high-orbit satellite.

3.3 The position of a time domain resource in the SS/PBCH block and a PBCH in the SS/PBCH block jointly indicate the type of the access device.

Optionally, in an embodiment, the position of a time domain resource of the SS/PBCH block may be used to indicate that the access device is a ground base station or a non-ground base station. If the access device is a non-ground base station, it may be further determined, by using a position of a time domain resource of the PBCH in the SS/PBCH block and/or a position of a frequency domain resource of the PBCH in the SS/PBCH block (namely, a size and a start position of a resource block occupied on the frequency domain resource), that the access device is a high-altitude base station, a low-orbit satellite, a medium-orbit satellite, or a high-orbit satellite.

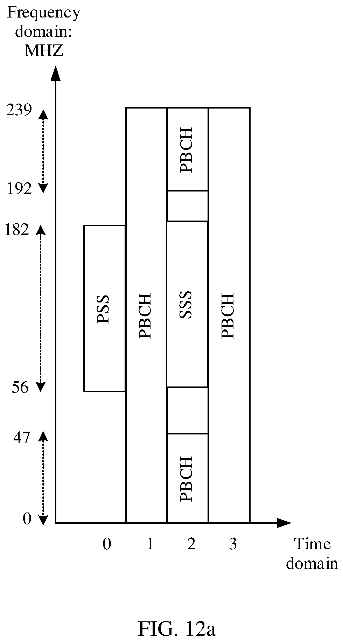

For example, if the position of a time domain resource of the SS/PBCH block indicates that the access device is a non-ground base station, as shown in FIG. 12a, when the PBCH block is located at a symbol bit 1, a symbol bit 2, and a symbol bit 3, and sizes and start positions of the PBCHs on the symbol bits are shown in FIG. 12a, it indicates that the access device is a high-altitude base station.

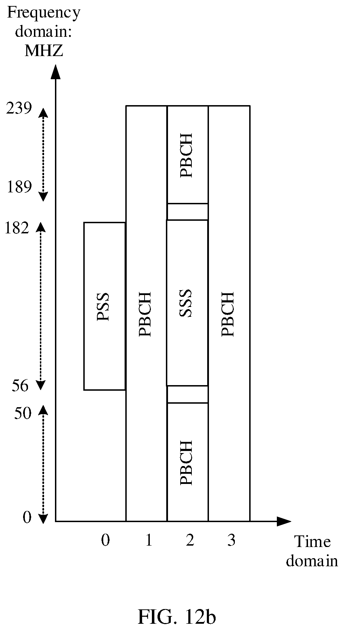

As shown in FIG. 12b, when the PBCH block is located in the symbol bit 1, the symbol bit 2, and the symbol bit 3, and the sizes and the start positions of the PBCHs on the symbol bits are shown in FIG. 12b, it indicates that the access device is a low-orbit satellite.

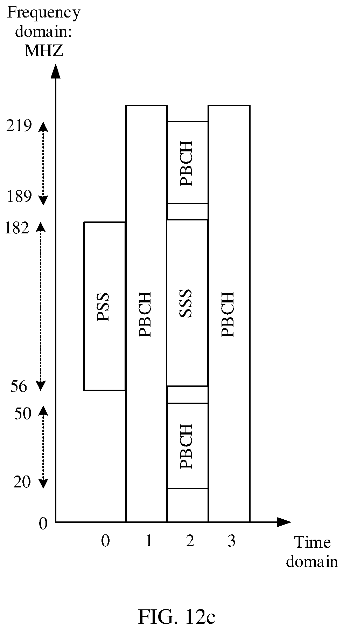

As shown in FIG. 12c, when the PBCH block is located in the symbol bit 1, the symbol bit 2, and the symbol bit 3, and the sizes and the start positions of the PBCHs on the symbol bits are shown in FIG. 12c, it indicates that the access device is a medium-orbit satellite.

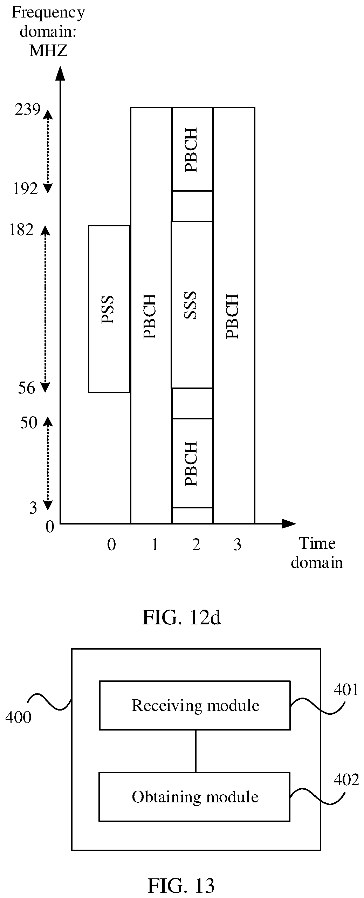

As shown in FIG. 12d, when the PBCH block is located in the symbol bit 1, the symbol bit 2, and the symbol bit 3, and the sizes and the start positions of the PBCHs on the symbol bits are shown in FIG. 12d, it indicates that the access device is a high-orbit satellite.

In conclusion, in the technical solutions in this embodiment of this application, the type of the access device can be determined in a combination of a plurality of indication manners, thereby effectively improving efficiency of identifying the type of the access device and reducing complexity of the broadcast signal.

The foregoing mainly describes the solutions provided in the embodiments of this application from a perspective of interaction between network elements. It may be understood that, to implement the foregoing functions, the terminal includes a corresponding hardware structure and/or software module for performing the functions. A person of ordinary skill in the art should easily be aware that, in combination with the examples described in the embodiments disclosed in this specification, units, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the terminal may be divided into functional modules based on the foregoing method examples. For example, each functional module may be obtained through division corresponding to each function, or two or more functions may be integrated into one processing module. The integrated module may be implemented in a form of hardware, or may be implemented in a form of a software functional module. It should be noted that, in this embodiment of this application, module division is exemplary, and is merely a logical function division. In actual implementation, another division manner may be used.

When each functional module is obtained through division based on each corresponding function, and when each functional module is obtained through division based on each corresponding function, FIG. 13 is a possible schematic structural diagram of a terminal 400 in the foregoing embodiment. As shown in FIG. 13, the terminal may include a receiving module 401 and an obtaining module 402. The receiving module 401 may be configured to perform a step of "receiving a broadcast signal sent by an access device". For example, the module may be configured to support the terminal in performing step 102 in the foregoing method embodiments. The obtaining module 402 may be configured to perform a step of "obtaining a type of the access device based on the broadcast signal". For example, the module may be configured to support the terminal in performing step 104, step 201, step 202, step 301, step 302, step 401, step 402, step 501, step 502, and step 601 to step 604 in the foregoing method embodiments.

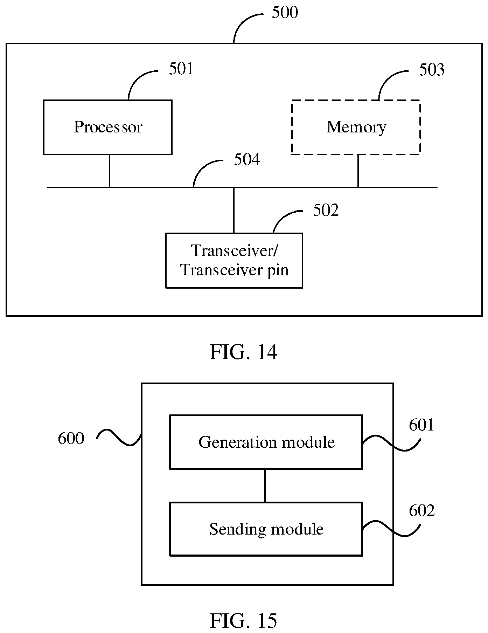

In another example, FIG. 14 is a schematic block diagram of a terminal 500 according to an embodiment of this application. The terminal 500 may include a processor 501 and a transceiver/transceiver pin 502, and optionally, further includes a memory 503. The processor 501 may be configured to perform steps performed by the terminal in the methods in the foregoing embodiments, control the receive pin to receive a signal, and control the transmit pin to send a signal.

Components of the terminal device 500 are coupled together by using a bus 504. In addition to a data bus, the bus 504 includes a power bus, a control bus, and a status signal bus. However, for clear description, various types of buses in the figure are marked as the bus system 504.

Optionally, the memory 503 may be configured to store instructions in the foregoing method embodiments.

It should be understood that the terminal 500 according to this embodiment of this application may correspond to the terminal in the methods in the foregoing embodiments, and the foregoing and other management operations and/or functions of the components in the terminal 500 are respectively used to implement corresponding steps of the foregoing methods. For brevity, details are not described herein again.

FIG. 15 is a possible schematic structural diagram of an access device 600 in the foregoing embodiment. As shown in FIG. 15, the access device 600 may include a generation module 601 and a sending module 602. The generation module 601 may be configured to perform a step of "generating a broadcast signal". For example, the module may be configured to support the access device in performing step 101 in the foregoing method embodiments. The sending module 602 may be configured to a step of "sending the broadcast signal". For example, the module may be configured to support the access device in performing step 102 in the foregoing method embodiments.

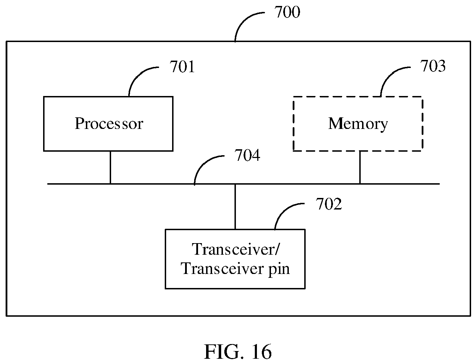

In another example, FIG. 16 is a schematic block diagram of an access device 700 according to an embodiment of this application. The access device 700 may include a processor 701 and a transceiver/transceiver pin 702, and optionally, further includes a memory 703. The processor 701 may be configured to perform steps performed by the terminal in the methods in the foregoing embodiments, control the receive pin to receive a signal, and control the transmit pin to send a signal.

Components of the access device 700 are coupled together by using a bus 704, where in addition to a data bus, the bus system 704 includes a power bus, a control bus, and a status signal bus. However, for clear description, various types of buses in the figure are marked as the bus system 704.

Optionally, the memory 703 may be configured to store instructions in the foregoing method embodiments.

It should be understood that the access device 700 according to this embodiment of this application may correspond to the terminal in the methods in the foregoing embodiments, and the foregoing and other management operations and/or functions of the components in the access device 700 are respectively used to implement corresponding steps of the foregoing methods. For brevity, details are not described herein again.

All related content of the steps in the foregoing method embodiments may be referenced to function descriptions of corresponding functional modules, and details are not described herein again.

Based on a same technical concept, an embodiment of this application further provides a computer-readable storage medium. The computer-readable storage medium stores a computer program, the computer program includes at least one segment of code, and the at least one segment of code may be executed by a terminal, to control the terminal to implement the foregoing method embodiments.

Based on a same technical concept, an embodiment of this application further provides a computer program. When executed by a terminal, the computer program is used to implement the foregoing method embodiments.

The program may be all or partially stored in a storage medium encapsulated with a processor, or may be partially or all stored in a memory not encapsulated with a processor.

Based on a same technical concept, an embodiment of this application further provides a processor. The processor is configured to implement the foregoing method embodiments. The processor may be a chip.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in network equipment. Certainly, the processor and the storage medium may exist in network equipment as discrete components.

A person skilled in the art should be aware that in the foregoing one or more examples, functions described in the embodiments of this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The embodiments of this application are described above with reference to the accompanying drawings. However, this application is not limited to the foregoing specific implementations. The foregoing specific implementations are merely exemplary rather than limiting. Many forms made by a person of ordinary skill in the art under the inspiration of this application without departing from the purposes of this application and the protection scope of the claims all fall within the protection scope of this application.

**Claims**

1. A communication method, wherein the method is applied to a terminal, and the method comprises:

    receiving a broadcast signal sent by an access device; and
    obtaining a type of the access device based on the broadcast signal, wherein the type of the access device comprises a first type and/or a second type, wherein the first type comprises a ground base station or a non-ground base station, and the second type comprises at least one of the following types: a ground base station, a high-altitude base station, a low-orbit satellite, a medium-orbit satellite, or a high-orbit satellite.

2. The method according to claim 1, wherein
    the broadcast signal comprises first identification information, and the first identification information is used to indicate the type of the access device; and
    the first identification information is a primary synchronization signal PSS and/or a secondary synchronization signal SSS.

3. The method according to claim 2, wherein the obtaining a type of the access device based on the broadcast signal specifically comprises:

    determining, based on a relationship between the first identification information and the first type, that the access device is a ground base station or a non-ground base station; and
    if the access device is a non-ground base station, obtaining the type of the access device based on a relationship between the first identification information and the second type.

4. The method according to claim 2, wherein the obtaining a type of the access device based on the broadcast signal specifically comprises:

    determining, based on a relationship between the PSS and the first type, that the access device is a ground base station or a non-ground base station; and
    if the access device is a non-ground base station, obtaining the type of the access device based on a relationship between the SSS and the second type.

5. The method according to any one of claims 1 to 4, wherein
    the broadcast signal comprises a first-type parameter used for identifying the type of the access device, and the first-type parameter is a sequence for generating a preamble.

6. The method according to claim 5, wherein the obtaining a type of the access device based on the broadcast signal specifically comprises:

    parsing the first-type parameter to obtain a first parameter; and
    obtaining the type of the access device based on a relationship between the first parameter and the type of the access device.

7. The method according to claim 6, wherein the obtaining the type of the access device based on a relationship between the first parameter and the type of the access device specifically comprises:

    determining, based on a relationship between the first parameter and the first type, that the access device is a ground base station or a non-ground base station; and
    if the access device is a non-ground base station, obtaining the type of the access device based on a relationship between the first parameter and the second type.

8. The method according to any one of claims 5 to 7, wherein the sequence comprises a ZC sequence and/or an M sequence.

9. The method according to claim 7, wherein the obtaining a type of the access device based on the broadcast signal further comprises:

    determining, based on a relationship between the first identification information and the first type, that the access device is a ground base station or a non-ground base station; and
    if the access device is a non-ground base station, obtaining the type of the access device based on a relationship between the first parameter and the second type.

10. The method according to any one of claims 1 to 9, wherein
    a position of a time domain resource of the broadcast signal and/or a position of a frequency domain resource of the broadcast signal are/is used to indicate the type of the access device.

11. The method according to claim 10, wherein the obtaining a type of the access device based on the broadcast signal specifically comprises:

    obtaining the position of the time domain resource and/or the position of the frequency domain resource of the broadcast signal; and
    obtaining the type of the access device based on a relationship between the position of the time domain resource and/or the position of the frequency domain resource and the type of the access device.

12. The method according to claim 10, wherein
    the position of the time domain resource is used to indicate an offset value N between a position of the broadcast signal on a time domain resource to which the broadcast signal belongs and a specified position.

13. The method according to claim 12, wherein
    if a value of N is in a first interval, the access device is a ground base station; or
    if a value of N is not in a first interval, the access device is a non-ground base station.

14. The method according to claim 12, wherein the obtaining a type of the access device based on the broadcast signal specifically comprises:

    obtaining a value of N; and
    obtaining the type of the access device based on the value of N.

15. The method according to claim 12, wherein the obtaining a type of the access device based on the broadcast signal specifically comprises:

    obtaining a value of N;
    determining, based on the value of N, that the access device is a ground base station or a non-ground base station; and
    if the access device is a non-ground base station, obtaining the type of the access device based on the value of N.

16. The method according to any one of claims 10 to 15, wherein
    the position of the frequency domain resource comprises a size and/or a start position of a resource block occupied by the broadcast signal on a frequency domain resource to which the broadcast signal belongs.

17. The method according to claim 16, wherein
    if the position of the frequency domain resource meets a first condition, the access device is a ground base station; or
    if the position of the frequency domain resource does not meet a first condition, the access device is a non-ground base station.

18. The method according to claim 16, wherein the obtaining a type of the access device based on the broadcast signal specifically comprises:

    obtaining the position of the frequency domain resource; and
    obtaining the type of the access device based on the position of the frequency domain resource.

19. The method according to claim 16, wherein the obtaining a type of the access device based on the broadcast signal specifically comprises:

obtaining the position of the frequency domain resource;
determining, based on the position of the frequency domain resource, that the access device is a ground base station or a non-ground base station; and
if the access device is a non-ground base station, obtaining the type of the access device based on the position of the frequency domain resource.

20. A computer-readable storage medium, wherein the computer-readable storage medium stores a computer program, the computer program comprises at least one segment of code, and the at least one segment of code may be executed by an apparatus to control the apparatus to perform the method according to any one of claims 1 to 19.

21. A computer program, wherein when the computer program is executed by an apparatus, the computer program is used to perform the method according to any one of claims 1 to 19.

22. An apparatus, comprising:

a memory, configured to store an instruction; and
at least one processor that is communicatively connected to the memory, wherein the at least one processor is configured to: when running the instruction, perform the method according to any one of claims 1 to 19.

FIG. 1

FIG. 2a

204

201

202

Processor

Tx

203

Rx

Memory

FIG. 2b

| Access device | | Terminal |

101. Generate a
broadcast signal

102. Send the broadcast signal

103. Receive the
broadcast signal

104. Obtain a type of
the access device based
on the broadcast signal

105. The terminal accesses the access device

FIG. 3

A terminal parses a first-type parameter to obtain a first parameter — 201

The terminal obtains a type of an access device based on a relationship between the first parameter and the type of the access device — 202

FIG. 4

A terminal obtains a type of a first-type parameter — 301

The terminal may obtain a type of an access device based on a relationship between the type of the first-type parameter and the type of the access device — 302

FIG. 5

A terminal obtains a position of a time domain resource of a PSS — 401

The terminal obtains a type of an access device based on the position of the time domain resource of the PSS — 402

FIG. 6

A terminal obtains a position of a frequency domain resource of a PSS — 501

The terminal obtains a type of an access device based on the position of the frequency domain resource of the PSS — 502

FIG. 7

Frequency domain: MHZ

FIG. 8a

Frequency
domain:
MHZ

239

182

153

56

27

0

PSS

PBCH

SSS

PBCH

PBCH

PBCH

Time
domain

FIG. 8b

FIG. 8c

FIG. 8d

FIG. 8e

Frequency
domain:
MHZ

239

182

56

23

0

PSS

PBCH

PBCH

SSS

PBCH

PBCH

Time
domain

FIG. 8f

FIG. 8g

Frequency
domain:
MHZ

239

182

100

56

0

PSS

PBCH

PBCH

SSS

PBCH

PBCH

Time
domain

FIG. 8h

FIG. 8i

Frequency
domain:
MHZ

239

200

182

56

0

PSS

PBCH

SSS

PBCH

PBCH

PBCH

Time
domain

FIG. 8j

A terminal parses a first-type parameter included in a PSS to obtain a first parameter ⟋601

The terminal determines, based on a relationship between the first parameter and a type of an access device, that the access device is a ground base station or a non-ground base station ⟋602

The terminal parses a second-type parameter included in an SSS to obtain a second parameter ⟋603

The terminal determines, based on a relationship between the second parameter and the type of the access device, that the access device is a high-altitude base station, a low-orbit satellite, a medium-orbit satellite, or a high-orbit satellite ⟋604

FIG. 9

Frequency
domain:
MHZ

239

186

60

0

PSS

PBCH

PBCH

SSS

PBCH

PBCH

Time
domain

FIG. 10a

FIG. 10b

FIG. 10c

Frequency
domain:
MHZ

239

166

40

0

PSS

PBCH

PBCH

SSS

PBCH

PBCH

Time
domain

FIG. 10d

FIG. 10e

~
TO
FIG. 11B

FIG. 11A

EP 3 820 201 A1

Frequency
domain:
MHZ

239

PBCH

182

PSS

PBCH

SSS

PBCH

56

PSS

PBCH

PBCH

0

0   1   2   3   Time
domain

Frequency
domain:
MHZ

239

PSS

SSS

113

PBCH

PBCH

PBCH

0

0   1   2   3   Time
domain

Frequency
domain:
MHZ

239

PSS

PBCH

113

PBCH

SSS

PBCH

PBCH

0

0   1   2   3   Time
domain

Frequency
domain:
MHZ

PBCH

SSS

126

PSS

PBCH

PBCH

0

0   1   2   3   Time
domain

~
TO
FIG. 11C

FIG. 11B

EP 3 820 201 A1

FIG. 11C

EP 3 820 201 A1

FIG. 12a

FIG. 12b

Frequency
domain:
MHZ

219

189

182

56

50

20

0

PSS

PBCH

SSS

PBCH

PBCH

PBCH

0    1    2    3    Time
domain

FIG. 12c

Frequency
domain:
MHZ

239

192

182

PSS  PBCH  PBCH

SSS

56

50

PBCH  PBCH

3

0

0    1    2    3     Time
domain

FIG. 12d

400

Receiving module    401

Obtaining module    402

FIG. 13

500

501

Processor

503

Memory

504

502

Transceiver/
Transceiver pin

FIG. 14

600

601

Generation module

602

Sending module

FIG. 15

700

701

Processor

703

Memory

704

702

Transceiver/
Transceiver pin

FIG. 16

## INTERNATIONAL SEARCH REPORT

| International application No. |
| --- |
| **PCT/CN2019/125680** |

**A. CLASSIFICATION OF SUBJECT MATTER**

H04W 48/10(2009.01)i

According to International Patent Classification (IPC) or to both national classification and IPC

**B. FIELDS SEARCHED**

Minimum documentation searched (classification system followed by classification symbols)

H04W; H04Q; H04B; H04L

Documentation searched other than minimum documentation to the extent that such documents are included in the fields searched

Electronic data base consulted during the international search (name of data base and, where practicable, search terms used)

CNKI, WPI, EPODOC, CNPAT: 基站, 接入, BS, NB, ENB, GNB, AP, 广播, 类型, 标识, 卫星, 远程基站, 非地面基站, 主同步信号, 辅同步信号, 前导, PSS, SSS, node b, access, base station, broadcast, satellite, remote, primary synchronization signal, secondary synchronization signal, preamble

**C. DOCUMENTS CONSIDERED TO BE RELEVANT**

| Category* | Citation of document, with indication, where appropriate, of the relevant passages | Relevant to claim No. |
| --- | --- | --- |
| X | CN 101268631 A (QUALCOMM INC.) 17 September 2008 (2008-09-17) description, page 14, paragraph 6 to page 16, paragraph 1, page 18, paragraph 3 to page 19, paragraph 6, figure 6 | 1, 20-22 |
| Y | CN 101268631 A (QUALCOMM INC.) 17 September 2008 (2008-09-17) description, page 14, paragraph 6 to page 16, paragraph 1, page 18, paragraph 3 to page 19, paragraph 6, figure 6 | 2-9 |
| Y | CN 101932139 A (ZTE CORPORATION) 29 December 2010 (2010-12-29) description, paragraphs [0077]-[0090] | 2-9 |
| A | US 2015146631 A1 (ELECTRONICS AND TELECOMMUNICATIONS RESEARCH INSTITUTE) 28 May 2015 (2015-05-28) entire document | 1-22 |
| A | CN 103945471 A (CHINA ACADEMY OF TELECOMMUNICATIONS TECHNOLOGY) 23 July 2014 (2014-07-23) entire document | 1-22 |
| A | CN 102057728 A (NOKIA SIEMENS NETWORKS) 11 May 2011 (2011-05-11) entire document | 1-22 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 March 2020** | **19 March 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2019/125680** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 105491546 A (ZTE CORPORATION) 13 April 2016 (2016-04-13)<br>entire document | 1-22 |
| A | CN 101243666 A (QUALCOMM INC.) 13 August 2008 (2008-08-13)<br>entire document | 1-22 |

Form PCT/ISA/210 (second sheet) (January 2015)

## INTERNATIONAL SEARCH REPORT
### Information on patent family members

International application No.

**PCT/CN2019/125680**

| Patent document cited in search report | | | Publication date (day/month/year) | Patent family member(s) | | | Publication date (day/month/year) |
|---|---|---|---|---|---|---|---|
| CN | 101268631 | A | 17 September 2008 | JP | 2009503935 | A | 29 January 2009 |
| | | | | WO | 2007015828 | A2 | 08 February 2007 |
| | | | | US | 2007021122 | A1 | 25 January 2007 |
| | | | | KR | 20080032203 | A | 14 April 2008 |
| | | | | EP | 1922823 | A2 | 21 May 2008 |
| CN | 101932139 | A | 29 December 2010 | WO | 2010149070 | A1 | 29 December 2010 |
| US | 2015146631 | A1 | 28 May 2015 | KR | 20130125282 | A | 18 November 2013 |
| | | | | WO | 2013168870 | A1 | 14 November 2013 |
| CN | 103945471 | A | 23 July 2014 | | None | | |
| CN | 102057728 | A | 11 May 2011 | JP | 2011522493 | A | 28 July 2011 |
| | | | | ES | 2680021 | T3 | 03 September 2018 |
| | | | | RU | 2010153153 | A | 20 July 2012 |
| | | | | US | 2015296442 | A1 | 15 October 2015 |
| | | | | DK | 2289271 | T3 | 04 November 2013 |
| | | | | CA | 2724811 | A1 | 10 December 2009 |
| | | | | PL | 2289271 | T3 | 31 January 2014 |
| | | | | CN | 107277892 | A | 20 October 2017 |
| | | | | BR | PI0822638 | A2 | 16 June 2015 |
| | | | | EP | 2289271 | A1 | 02 March 2011 |
| | | | | US | 2011080863 | A1 | 07 April 2011 |
| | | | | MX | 2010013383 | A | 21 December 2010 |
| | | | | KR | 20110025960 | A | 14 March 2011 |
| | | | | AU | 2008357313 | A1 | 10 December 2009 |
| | | | | WO | 2009146725 | A1 | 10 December 2009 |
| | | | | ES | 2433136 | T3 | 09 December 2013 |
| CN | 105491546 | A | 13 April 2016 | WO | 2016054901 | A1 | 14 April 2016 |
| CN | 101243666 | A | 13 August 2008 | US | 2006285481 | A1 | 21 December 2006 |
| | | | | EP | 1897314 | A1 | 12 March 2008 |
| | | | | JP | 2008544646 | A | 04 December 2008 |
| | | | | KR | 20080021785 | A | 07 March 2008 |
| | | | | AT | 456236 | T | 15 February 2010 |
| | | | | WO | 2006138196 | A1 | 28 December 2006 |
| | | | | DE | 602006011893 | D1 | 11 March 2010 |

Form PCT/ISA/210 (patent family annex) (January 2015)

**EP 3 820 201 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811544528X